# EUROPEAN PATENT APPLICATION

(11) **EP 2 631 839 A1**
(43) Date of publication of application: **28.08.2013**
(21) Application number: 13156046.8
(22) Date of filing: 20.02.2013
(51) Int. Cl.: G06F 21/56, H04L 29/06

(54) **Program analysis system and method thereof**

(30) Priority: 23.02.2012 JP 2012037029
(71) Applicant: Hitachi Ltd., Tokyo 100-8280 (JP)
(72) Inventor: Kawaguchi, Nobutaka, Tokyo, 100-8220 (JP); Kaji, Tadashi, Tokyo, 100-8220 (JP); Yamaguchi, Hiroki, Tokyo, 100-8220 (JP)
(74) Representative: Moore, Graeme Patrick

(57) **Abstract**

According to the present invention, efficient analysis for a program that acts after fixed time since the activation or only on a specific date is realized. A program analysis system that analyzes a program while adjusting time elapse velocity in program execution environment sets analysis conditions such as time elapse velocity in the execution environment, program execution start time and execution termination time, adjusts the time elapse velocity and the program execution start time according to the determination of an analysis manager, executes the program till the execution termination time, monitors the execution environment, acquires an action record of the program, analyzes the action record, and clarifies the behavior of the program. Further, the program analysis system resets the analysis conditions based upon a result of analysis, re-analyzes, monitors communication between a sample and an external terminal, and varies the time elapse velocity set by the analysis manager to prevent time-out from occurring in communication.

## Description

### FILED OF THE INVENTION

The present invention relates to a program analysis system that analyzes the behavior of a computer program.

### BACKGROUND OF THE INVENTION

For a method of analyzing the behavior of a computer program without using a source code, there are two categories of static analysis and dynamic analysis. In the static analysis, behavior is examined by analyzing an instruction code described in a program file. In the meantime, in the dynamic analysis, behavior is examined by executing a program in a computer and observing its behavior at that time. In some programs, various measures are taken to obstruct static analysis. Especially, as recent malware (a malicious program such as a computer virus and spyware) often makes file structure difficult to read or often encrypts file structure so as to obstruct static analysis, a problem that it takes long time to decode and encrypt file structure in examination by static analysis and expert engineers are required occurs. In the meantime, as behavior is examined by observing actual behavior in dynamic analysis, compared with static analysis, the dynamic analysis is less influenced by making a file difficult to read or encrypting a file and analysis can be completed in relatively short time.

Therefore, as described in JP-A No. 2009-181335, JP-A No. 2009-37545 and IEEE International Conference of Communications 2008 Proceedings, "Malware Behavior Analysis in Isolated Miniature Network for Revealing Malware's Network Activity", the research and the development of systems that automate a process of dynamic analysis and realize efficient analysis are advanced. In these systems, malware is executed in execution environment, behavior (for example, the file access and the network communication of malware) observed in fixed time is acquired, and is analyzed.

### SUMMARY OF THE INVENTION

However, some programs substantially act after fixed time elapses since activation or on only a specific date. Besides, as in the year 2000 problem, some programs cause malfunction after a specific date. When such a program is analyzed in the above-mentioned system, a problem that it takes much time to analyze the program or the analysis fails occurs. In the above-mentioned IEEE International Conference of Communications 2008 Proceedings, the efficiency of analysis is enhanced by invalidating an executed function so as to stop the activity of malware which is an object of the analysis for fixed time. However, this method is not effective in malware that requires verifying the elapse of time after the execution of the function or malware that acts on only a specific date.

An object of the present invention is to provide a system and a method that efficiently analyze a program which acts after fixed time since activation or on only a specific date.

In the program analysis system according to the present invention, a program is analyzed by operating a time control function in execution environment in which the program is operated, varying time elapse velocity in the execution environment to be faster or slower than real time without having a bad effect upon communication activity with an external device and recording its action, adjusting the time elapse velocity in the program execution environment.

The program analysis system is provided with main five operation parts of an analysis management unit, a sample execution device, an action recording unit, an action analyzing unit and a communication monitoring unit. In this case, a sample means malware to be an object of analysis. The analysis management unit sets conditions of analysis such as time elapse velocity in execution environment, program execution start time and execution termination time. The sample execution device adjusts the time elapse velocity and the program execution start time according to the conditions of analysis set by the analysis management unit and executes a program by the execution termination time. The action recording unit monitors the execution environment and acquires the record of the action of the program. The action analyzing unit analyzes the behavior of the program based upon the record of the action. Further, the analysis management unit resets conditions of analysis based upon the result of the analysis and performs re-analysis. The communication monitoring unit monitors communication between the sample and an external terminal and varies the time elapse velocity set by the analysis management unit to prevent time-out from being caused in the communication.

According to the present invention, the efficient analysis of a program that acts in fixed time after activation or on only a specific date can be realized.

### BRIEF DESCRIPTION OF THE DRAWINGS

Fig. 1 shows the whole configuration of a system for embodying the present invention;
Fig. 2 shows the physical configuration of a system management device;
Fig. 3 shows the logical configuration of the system management device;
Fig. 4 shows the physical configuration of a sample execution device;
Fig. 5 shows the logical configuration of the sample execution device;
Fig. 6 shows the physical configuration of a timer;
Fig. 7 shows the physical configuration of an action analyzer;
Fig. 8 shows the logical configuration of the action analyzer;
Fig. 9 shows the physical configuration of a communication monitoring device;
Fig. 10 shows the logical configuration of the communication monitoring device;
Fig. 11 shows an example of records in analysis scenario DB;
Fig. 12 shows an example of records in action record DB;
Fig. 13 shows an example of records in re-analyzing rule DB;
Fig. 14 shows an example of records in analysis result DB;
Fig. 15 shows an example of records in recording rule DB;
Fig. 16 shows an example of records in analyzing rule DB;
Fig. 17 shows an example of records in time elapse velocity DB;
Fig. 18 is a flowchart showing an analysis management process;
Fig. 19 is a flowchart showing a sample execution process;
Fig. 20 is a flowchart showing a time elapse velocity change process;
Fig. 21 shows relation between the timer and a clock;
Fig. 22 is a flowchart showing a time elapse velocity adjustment process;
Fig. 23 is a flowchart showing an action record process;
Fig. 24 is a flowchart showing an action analysis process;
Fig. 25 is a flowchart showing a communication management process;
Fig. 26A shows relation between a pulse of an oscillator and a clock signal to CPU and Fig. 26B shows relation between a pulse of the oscillator and a clock signal to the CPU; and
Fig. 27 shows various setting modes in relation between a pulse of the oscillator and a clock signal to the CPU.

### DETAILED DESCRIPTION OF THE PREFERRED EMBODIMENTS

An embodiment of the present invention will be described referring to the drawings below. In this embodiment, a system that analyzes malware the time and the action time since activation till action of which are obscure in linkage among four units via a network will be described. After this embodiment is described, a modified example will be described.

### (System configuration)

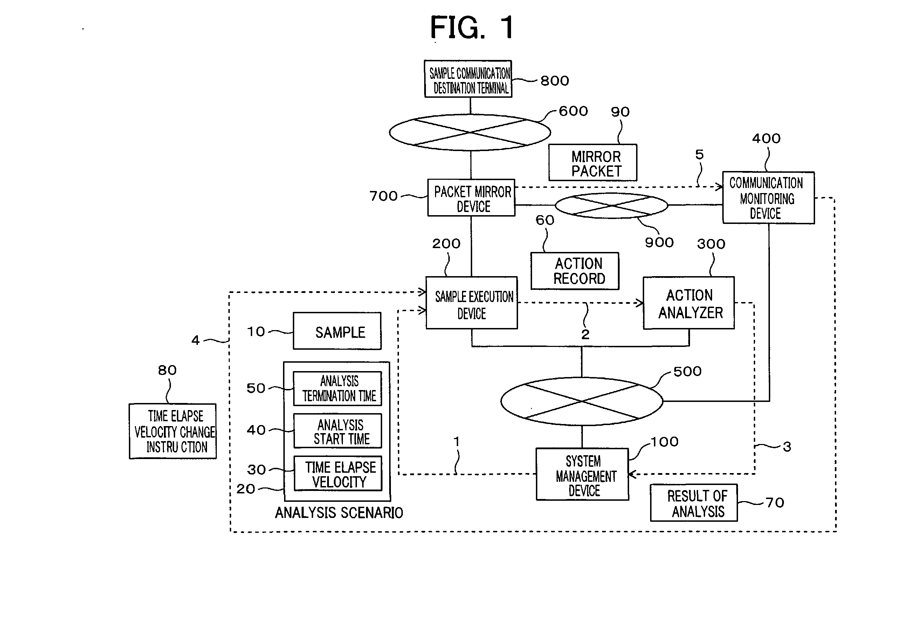

Fig. 1 shows the whole configuration of the system that embodies the present invention. This system includes a system management device 100, a sample execution device 200, an action analyzer 300, a communication monitoring device 400, a communication network 500, a communication network 600, a mirror device 700, a sample communication destination terminal 800 and a communication network 900 as components. The device 100, the device 200, the analyzer 300 and the device 400 respectively connected via the communication network 500 analyze a program in linkage.

The system management device 100 is configured by one or more well-known personal computers and a computer such as a workstation. The system management device 100 manages the proceedings of a malware analysis process executed in this system. Besides, the system management device determines a sample (malware) 10 which is an object of analysis and an analysis scenario 20 including analysis start time 40 that specifies time set as analysis start time in execution environment, analysis termination time 50 that specifies time at which analysis is to be terminated and time elapse velocity 30, and instructs the sample execution device 200. The details of the configuration of the system management device 100 and the details of the communication with another device will be described later.

The sample execution device 200 is configured by one or more well-known personal computers and a computer such as a workstation. The sample execution device 200 executes the sample 10 in execution environment according to an instruction transmitted from the system management device 100. Besides, the sample execution device records the action information of the sample such as file access and network communication as an action record 60 in the execution of the sample 10. The details of the configuration of the sample execution device 200 and the details of the communication with another device will be described later.

The action analyzer 300 is configured by one or more well-known personal computers and a computer such as a workstation. The action analyzer 300 analyzes the action information of the sample included in the action record 60 transmitted from the sample execution device 200 and prepares a result of analysis 70 showing what kind of action the sample performs. The system management device 100 determines whether re-analysis should be made or not and its procedure referring to the result of analysis 70. The details of the configuration of the action analyzer 300 and the details of the communication with another device will be described later.

The communication monitoring device 400 is configured by one or more well-known personal computers and a computer such as a workstation. The communication monitoring device 400 monitors transmission control protocol (TCP) communication between the sample execution device 200 and the sample communication destination terminal 800 via the communication network 600 by means of a mirror packet 90 acquired via the packet mirror device 700 and the communication network 900. The communication monitoring device controls time elapse velocity according to a state of communication to prevent communication from being influenced by the acceleration of the time elapse velocity. The details of the configuration of the communication monitoring device 400 and the details of the communication with another device will be described later.

The communication network 500 may be a world area network (WAN), a local area network (LAN) and a public network of a cellular phone, PHS and others. Communication among the system management device 100, the sample execution device 200, the action analyzer 300 and the communication monitoring device 400 is made via the communication network 500.

The communication network 600 may be WAN, LAN and a public network of a cellular phone, PHS and others. Communication between the sample execution device 200 and the sample communication destination terminal 800 is made via the communication network 600.

The communication network 900 may be WAN, LAN and a public network of a cellular phone, PHS and others. Communication between the packet mirror device 700 and the sample communication destination terminal 800 is made via the communication network 600.

The mirror device 700 transfers all TCP packets included in the TCP communication which the sample execution device 200 and the sample communication destination terminal 800 make via the communication network 600 to the communication monitoring device 400 as the mirror packet 90.

The sample communication destination terminal 800 is a generic name of terminals that communicate with the sample executed in the sample execution device 200.

A line 1 shown in Fig. 1 shows a logical flow of information between the system management device 100 and the sample execution device 200. Similarly, a line 2 shows a logical flow of information between the sample execution device 200 and the action analyzer 300 and a line 3 shows a logical flow of information between the action analyzer 300 and the system management device 100. The lines 1, 2, 3 use the communication network 500 for a physical transmission means of information. The physical transmission of information is not required to be directly made between each device and may be also made via an external storage and others.

Two kinds of information of the sample 10 and the analysis scenario 20 are transmitted from the system management device 100 to the sample execution device 200 via the line 1. In the analysis scenario 20, the time elapse velocity 30, the analysis start time 40 and the analysis termination time 50 respectively in the sample execution device 200 are included. The sample execution device 200 that receives the analysis scenario 20 sets the time of execution environment to the analysis start time 40 and sets the time elapse velocity of analysis environment to the time elapse velocity 30. Until the time of the execution environment reaches the analysis termination time 50, analysis is made. The system management device 100 simultaneously transmits one or more analysis scenarios 20.

The action record 60 is transmitted from the sample execution device 200 to the action analyzer 300 via the line 2. The result of analysis 70 is transmitted from the action analyzer 300 to the system management device 100 via the line 3.

Besides, a line 4 shows a logical flow of information between the sample execution device 200 and the communication monitoring device 400. Similarly, a line 5 shows a logical flow of information between the packet mirror device 700 and the communication monitoring device 400.

A time elapse velocity change instruction 80 is transmitted from the communication monitoring device 400 to the sample execution device 200 via the line 4. Similarly, the mirror packet 90 is transmitted from the packet mirror device 700 to the communication monitoring device 400 via the line 5.

In Fig. 1, the system management device 100, the sample execution device 200, the action analyzer 300 and the communication monitoring device 400 are configured by separate processors; however, these may be also realized by one processor. Moreover, plural sample execution devices 200, plural action analyzers 300 and plural communication monitoring devices 400 are provided and the system management device 100 may be also configured to manage plural these. Further, the sample execution device 200, the action analyzer 300 and the communication monitoring device 400 are configured by one processor and the system management device 100 may be also configured to manage plural processors.

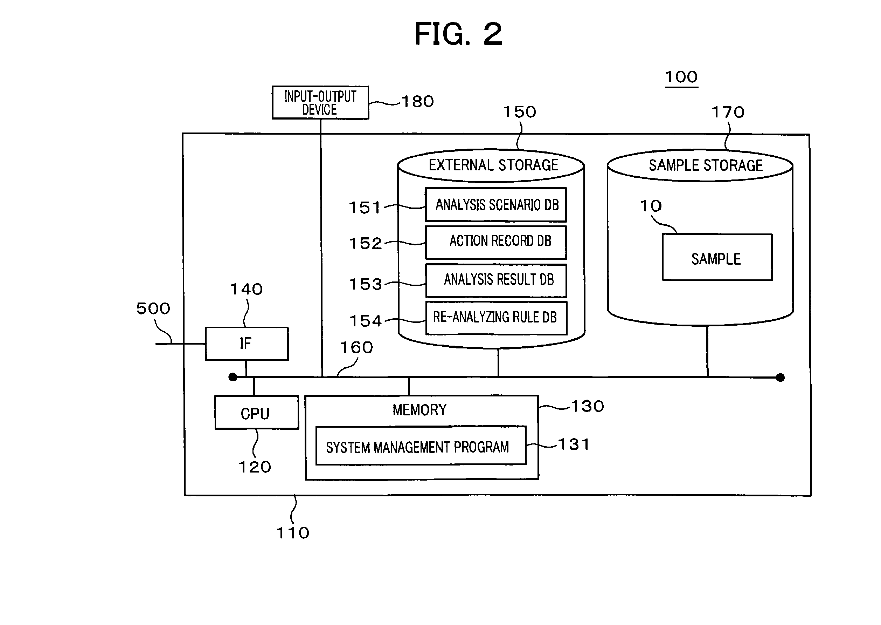

Fig. 2 shows the physical configuration of the system management device 100. The system management device 100 is configured by a body of the system 110 and an input-output device 180.

The body of the system 110 is provided with CPU 120, a memory 130, an interface 140, an external storage 150, a bus 160 and a sample storage 170.

The CPU 120 is an arithmetic unit for executing processing. The memory 130 is a storage medium including data in which a set of instructions executed in the CPU 120 are described as a program.

A system management program 131 is included in the memory 130. The system management program 131 manages the analysis of the sample when the program is executed in the CPU 120. A concrete management procedure will be described later.

The interface 140 is a communication device for connecting the system management device 100 to the communication network 500. Communication equipment such as a LAN card corresponds to this. The interface 140 may be described as IF in the drawing.

The external storage 150 is configured by a storage medium such as a hard disk drive (HDD) and stores analysis scenario DB 151, action record DB 152, analysis result DB 153 and re-analyzing rule DB 154. The concrete contents of these DBs will be described later.

The bus 160 connects the CPU 120, the memory 130, the interface 140, the external storage 150, the sample storage 170 and the input-output device 180.

The sample storage 170 is configured by a storage medium such as HDD and stores the sample 10 during analyzation.

The input-output device 180 inputs data by a manager to the system management device 100 and outputs data in the system management device 100. For one example of the input-output device, a keyboard, a mouse and a display can be given. The concrete input-output contents will be described later.

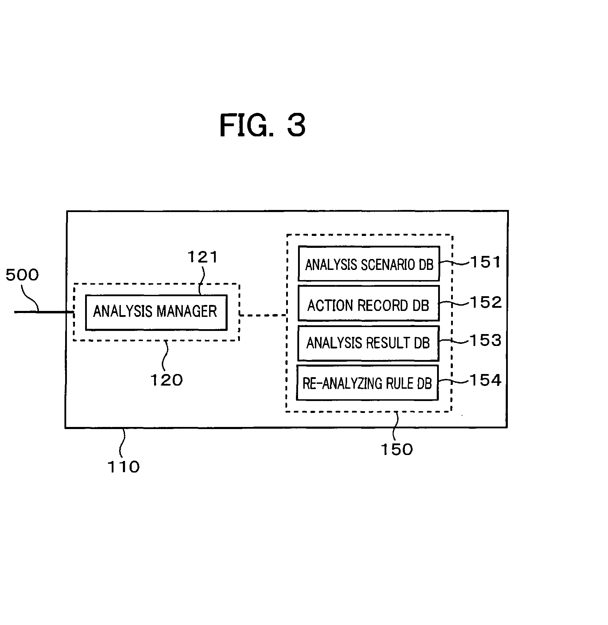

Fig. 3 shows the functional configuration of the system management device 100 and relation with physical each device. The CPU 120 included in the body 100 of the system management device 100 includes an analysis manager 121. The function of the analysis manager 121 is embodied by the execution of the system management program 131 by the CPU 120.

The analysis manager 121 manages a situation of the analysis of the sample 10, transmits the analysis scenario 20 to the sample execution device 200, and instructs a sample execution method. Besides, the analysis manager receives the result of analysis 70 from the action analyzer 300 and judges whether re-analysis is required or not and its method. The details will be described later.

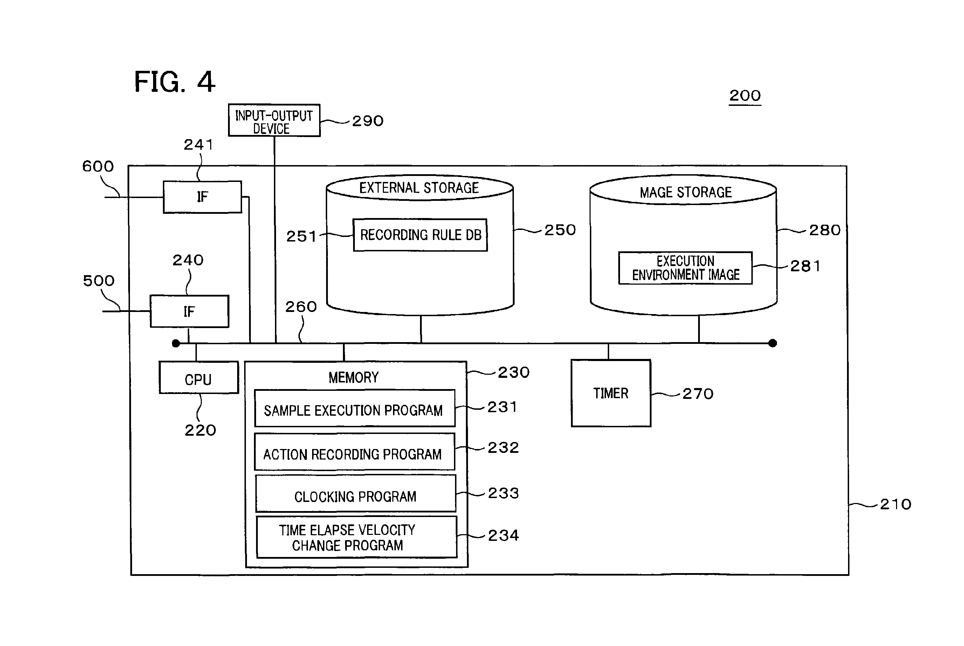

Fig. 4 shows the physical configuration of the sample execution device 200. The sample execution device 200 is configured by a body of the unit 210 and an input-output device 290.

The body of the unit 210 is provided with CPU 220, a memory 230, an interface 240, an interface 241, an external storage 250, a bus 260, a timer 270 and an image storage 280.

The CPU 220 is an arithmetic unit for executing processing. The memory 230 is a storage medium including data in which a set of instructions executed by the CPU 220 is described as a program.

In the memory 230, a sample execution program 231, an action recording program 232, a clocking program 233 and a time elapse velocity change program 234 are included. The sample execution program 231 executes the sample 10, adjusting the time elapse velocity 30 when the program is executed in the CPU 220. The action recording program 232 acquires the action record 60 of the sample 10 when the program is executed in the CPU 220. Besides, the clocking program 233 provides time information in the sample execution device 200 to the sample 10, the sample execution program 231 and the action recording program 232 when the program is executed in the CPU 220. In addition, the time elapse velocity change program 234 changes the time elapse velocity 30 when the program is executed in the CPU 220. The concrete management procedure of each program will be described later.

The interface 240 is a communication device for connecting the sample execution device 200 to the communication network 500. Communication equipment such as a LAN card corresponds to this. The interface 240 may be described as IF in the drawing. Similarly, the interface 241 is a communication device for connecting the sample execution device 200 to the communication network 600.

The external storage 250 is configured by a storage medium such as HDD and stores recording rule DB 251. In the recording rule DB, information showing what action of the sample 10 the action recording program 232 records is described. The concrete contents of the DB will be described later.

The bus 260 connects the CPU 220, the memory 230, the interface 240, the external storage 250, the timer 270, the image storage 280 and the input-output device 290.

The timer 270 is hardware including an element oscillated in a fixed cycle and measures the elapse of time based upon an observed frequency. Every time fixed time elapses, the timer transmits a signal to the CPU 220. The CPU 220 can be informed of the elapse of time by receiving the signal. The details of the timer 270 will be described later.

The image storage 280 is configured by a storage medium such as HDD and stores an execution environment image 281. The execution environment image 281 is a file including the configuration information of a general operating system and provides software environment for executing the sample 10 when the sample 10 is executed in the CPU 220. Besides, in the image storage 280, information related to a prepared or changed file and prepared or changed registry while the sample 10 is executed is temporarily retained.

The input-output device 290 inputs data by the manager to the sample execution device 200 and outputs data in the sample execution device 200. For one example of the input-output device, a keyboard, a mouse and a display can be given. The concrete input-output contents will be described later.

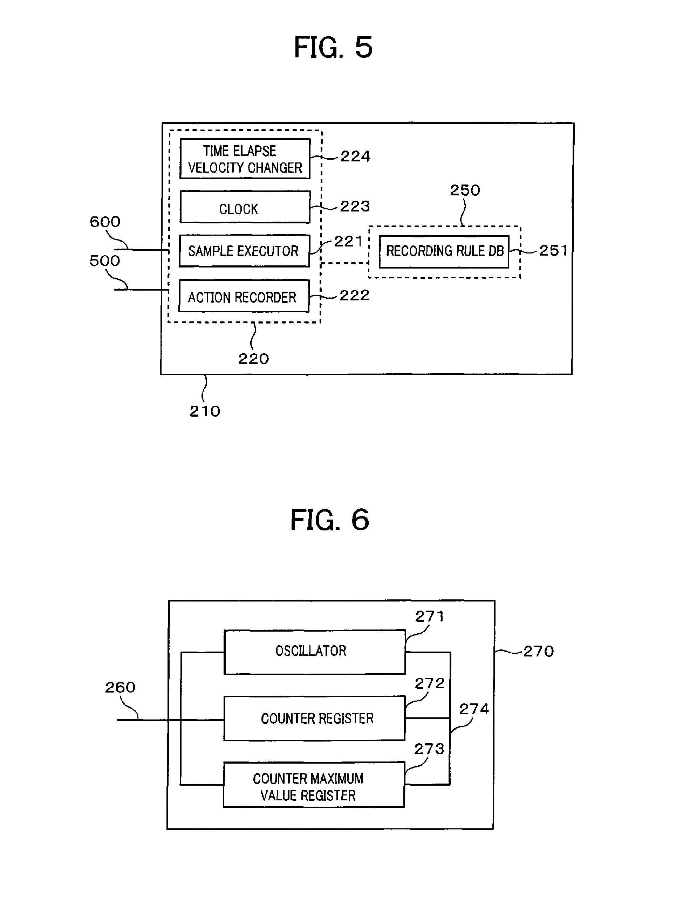

Fig. 5 shows the functional configuration of the sample execution device 200 and relation with physical each device. The CPU 220 included in the body 210 of the sample execution device 200 includes a sample executor 221, an action recorder 222, a clock 223 and a time elapse velocity changer 224. The function of the sample executor 221 is embodied by the execution of the sample execution program 231 by the CPU 220. The function of the action recorder 222 is embodied by the execution of the action recording program 232 by the CPU 220. The function of the clock 223 is embodied by the execution of the clocking program 233 by the CPU 220. The function of the time elapse velocity changer 224 is embodied by the execution of the time elapse velocity change program 234 by the CPU 220.

The sample executor 221 executes the sample 10 received from the system management device 100 according to the analysis scenario 20. At this time, the sample executor accesses the timer 270 and adjusts the time elapse velocity 30. The details will be described later.

The action recorder 222 records the action of the sample 10 executed by the sample executor 221 and transmits it to the action analyzer 300 as the action record 60. The details will be described later.

The clock 223 receives a signal from the timer 270 via the bus 260 and determines current time in the sample execution device 200. The details of a procedure for determining the current time will be described later. The sample 10 grasps the current time by referring to the clock 223. For example, if it is programmed that the sample 10 starts specific action just at midnight of Dec. 31, 2010, it starts the action when time in the clock 223 is just at midnight of Dec. 31, 2010.

The time elapse velocity changer 224 changes the time elapse velocity 30 according to the time elapse velocity change instruction 80 received from the communication monitoring device 400. The details will be described later.

Fig. 6 shows the physical configuration of the timer 270. The timer 270 is configured by an oscillator 271, a counter register 272, a counter maximum value register 273 and a bus 274.

The oscillator 271 is an element having a characteristic of oscillating (generating a pulse) in a fixed cycle such as crystal. The oscillator 271 applies a signal to the counter register 272 via the bus 274 every oscillation. For example, in the case of the oscillator the cycle of which is 1 M (=1000000) Hz, the oscillator oscillates once per 1 microsecond and applies a signal to the counter register 272.

The counter register 272 is an element that can store a numeric value having the fixed number of digits. The counter register 272 adds +1 to a stored value when the counter register receives a signal from the oscillator 271. Every time +1 is added to the value, the counter register 272 compares the added value with a value stored in the counter maximum value register 273 via the bus 274. When a value of the counter register 272 is the same as a value in the counter maximum value register 273, the counter register transmits a signal (a clock signal) to the CPU 220 via the bus 260. After the clock signal is transmitted, the value of the counter register 272 is reset to zero.

The counter maximum value register 273 is an element that stores a specific value and as described above, the value is compared with a value in the counter register 272.

For example, when the cycle of the oscillator 271 is 1 MHz and a value of the counter maximum value register 273 is 10000, a value of the counter register 272 becomes equal to a value of the counter maximum value register 273 100 (=1 M/10000) times per one sec and a clock signal is transmitted to the CPU 220.

Besides, for the configuration of the timer 270, a value of the counter register 272 is not added by +1 every time the oscillator 271 oscillates but may be also added by a specific value. Moreover, when a larger value than +1 is added, a cycle in which a clock signal is transmitted to the CPU 220 is made shorter as the added value is greater. For example, when the cycle of the oscillator 271 is 1 MHz and a value of the counter maximum value register 273 is 10000, a clock signal is generated 50 times per one sec if a value added to the counter register 272 is +2.

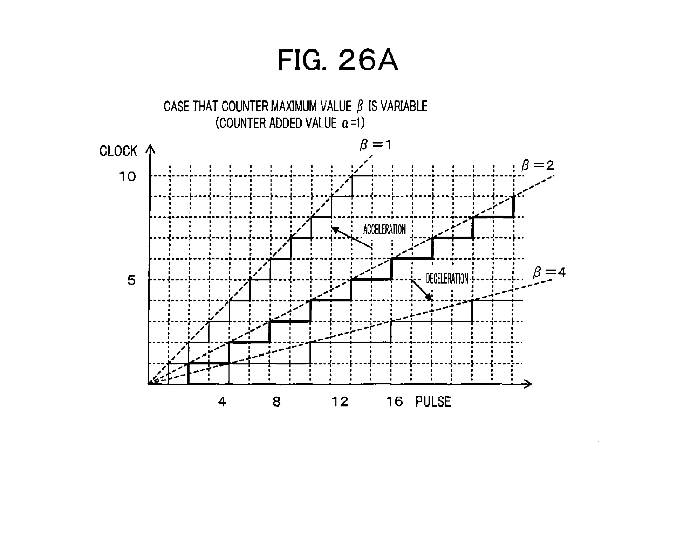

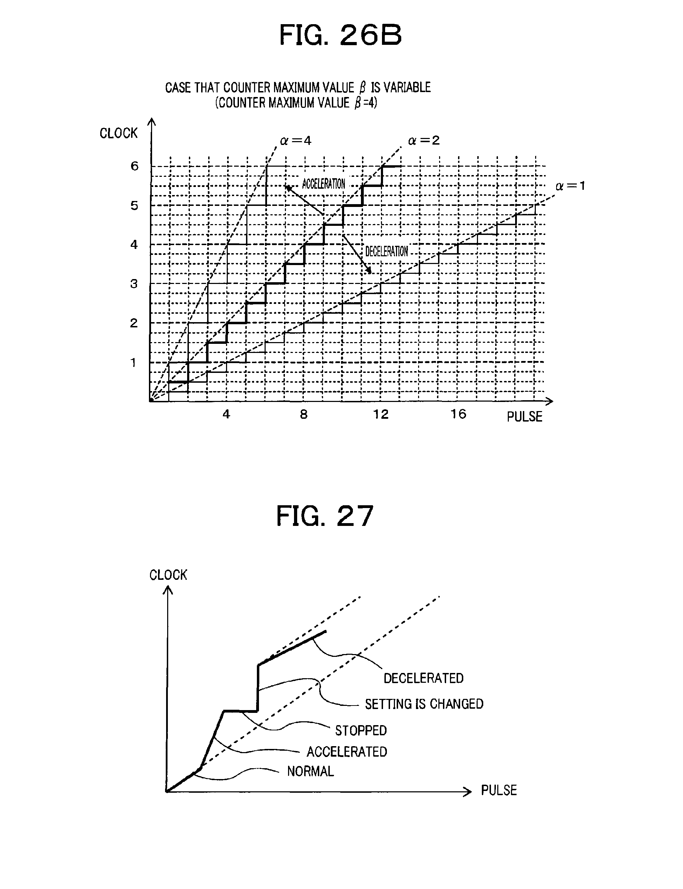

Figs. 26A and 26B show relation between a pulse of the oscillator and a clock to the CPU respectively described above. In Figs. 26A and 26B, a value added to the counter register is set to α, a maximum value in the counter maximum value register is set to β, and the combination of α and β is changed. Fig. 26A shows relation when the value α added to the counter register is fixed to 1 and the maximum value β in the counter maximum value register is varied. Fig. 26B shows relation when the maximum value β is fixed to 4 and the value α added to the counter register is varied. Some broken lines different in an inclination shown in Figs. 26A and 26B are envelopes of a step function in the drawings and show relation "Tc = (α/β) Tp" between a pulse (Tp) and a clock (Tc). However, α≤β, the relation is determined by the ratio of α and β, and the acceleration or the deceleration of a clock can be realized by varying the ratio. Accordingly, relation between v = 2 in Fig. 26A and α = 2 in Fig. 26B is the same (in both cases, when two pulses increase, one clock increases).

When a clock is generated by decreasing a value of the counter register 272, a signal is transmitted every time the value of the counter register 272 becomes zero. After the transmission of the signal, the value of the counter register 272 is reset to a value of the counter maximum value register 273. To stop the progress of the processing, a counting process by the timer 270 is required to be stopped.

Fig. 27 shows various setting modes in the above-mentioned relation between a pulse of the oscillation and a clock to the CPU. That is, each setting mode of "normal" which is relation when a program is normally operated, "acceleration" in which a clock is faster progressed than a pulse of the oscillator, "a stop" in which the operation of the timer is stopped and the progress of the processing is stopped, "a change of setting" in which a value of a clock is varied to a predetermined value and the progress of the processing is discontinuously varied and "deceleration" in which a clock is progressed more slowly than a pulse of the oscillator is specified.

The bus 260 connects the oscillator 271, the counter register 272 and the counter maximum value register 273.

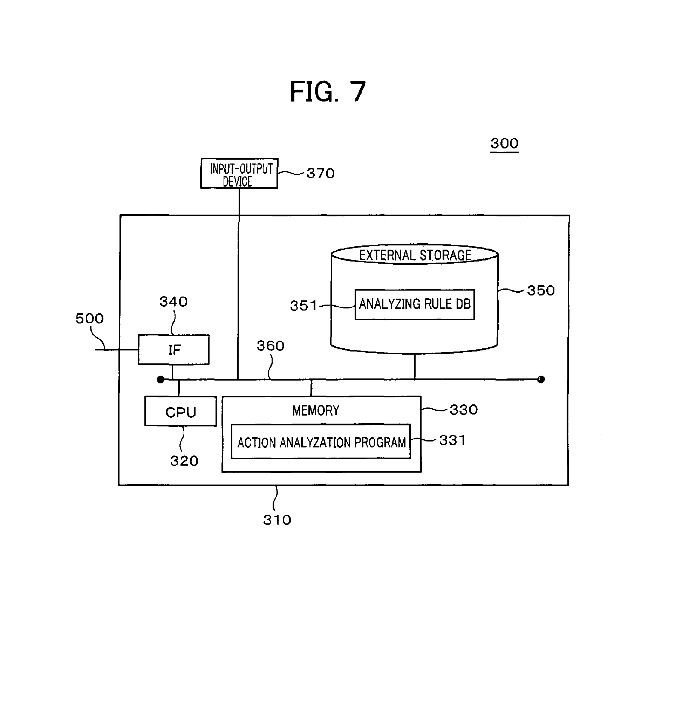

Fig. 7 shows the physical configuration of the action analyzer 300. The action analyzer 300 is configured by a body of the analyzer 310 and an input-output device 370.

The body of the analyzer 310 is provided with CPU 320, a memory 330, an interface 340, an external storage 350 and a bus 360.

The CPU 320 is an arithmetic unit for executing processing. The memory 330 is a storage medium including data in which a set of instructions executed in the CPU 320 is described as a program.

An action analysis program 331 is included in the memory 330. When the action analysis program 331 is executed by the CPU 320, the analysis of the action record 60 is made. A concrete analysis procedure will be described later.

The interface 340 is a communication device for connecting the action analyzer 300 to the communication network 500. Communication equipment such as a LAN card corresponds to this. The interface 340 may be IF in the drawing.

The external storage 350 is configured by a storage medium such as HDD and stores analyzing rule DB 351. The concrete contents of this DB will be described later.

The bus 360 connects the CPU 320, the memory 330, the interface 340, the external storage 350 and the input-output device 370.

The input-output device 370 inputs data by the manager to the action analyzer 300 and outputs data in the action analyzer 300. For one example of the input-output device, a keyboard, a mouse and a display can be given. The concrete input-output contents will be described later.

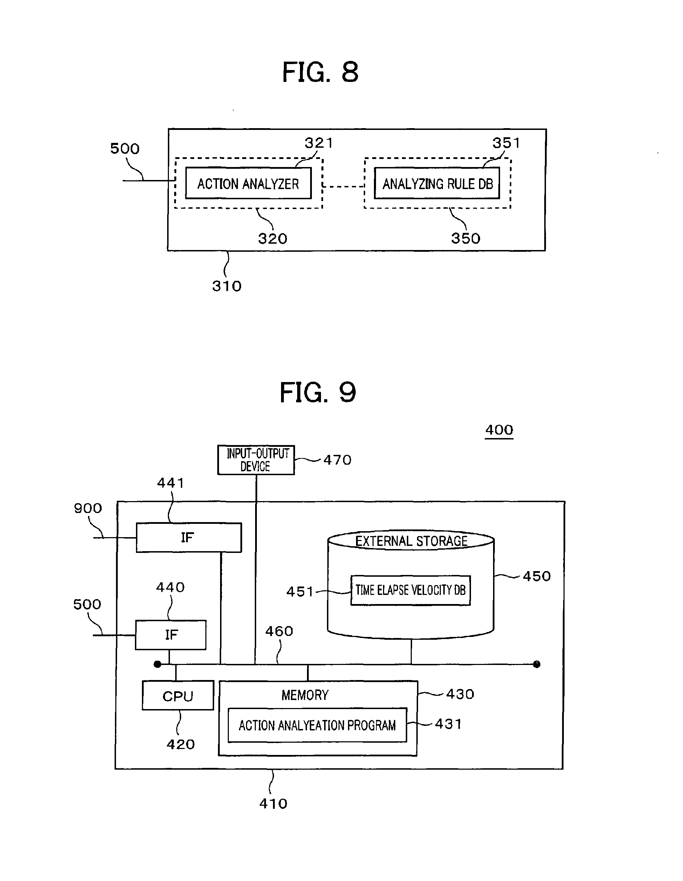

Fig. 8 shows the functional configuration of the action analyzer 300 and relation with physical each device. The CPU 320 included in the body 310 of the action analyzer 300 includes an action analyzer 321. The function of the action analyzer 321 is embodied by executing an action analysis program 331 by the CPU 320.

The action analyzer 321 analyzes the contents of the action record 60 prepared by the sample execution device 200 and outputs the result of analysis 70 of the sample 10. The details will be described later.

Fig. 9 shows the physical configuration of the communication monitoring device 400. The communication monitoring device 400 is configured by a body of the device 410 and an input-output device 490.

The body of the device 410 is provided with CPU 420, a memory 430, an interface 440, an interface 441, an external storage 450 and a bus 460.

The CPU 420 is an arithmetic unit for executing processing. The memory 430 is a storage medium including data in which a set of instructions executed in the CPU 420 is described as a program.

In the memory 430, an action analyzation program 431 is included. When the action analyzation program 431 is executed in the CPU 420, time elapse velocity at which TCP communication between the sample execution device 200 and the sample communication destination terminal 800 is not time-out is operated and a result of the operation is input to the sample execution device 200. A concrete procedure of the action analyzation program 431 will be described later.

The interface 440 is a communication device for connecting the communication monitoring device 400 to the communication network 500. Communication equipment such as a LAN card corresponds to this. The interface 440 may be described as IF in the drawing. Similarly, the interface 441 is a communication device for connecting the communication monitoring device 400 to the communication network 900.

The external storage 450 is configured by a storage medium such as HDD and stores time elapse velocity DB 451. In the time elapse velocity DB 451, information related to the TCP communication of the sample 10 is recorded. The concrete contents of the DB will be described later.

The bus 460 connects the CPU 420, the memory 430, the interface 440, the external storage 450 and the input-output device 490.

The input-output device 490 inputs data by the manager to the communication monitoring device 400 and outputs data in the communication monitoring device 400. For one example of the input-output device, a keyboard, a mouse and a display can be given. The concrete input-output contents will be described later.

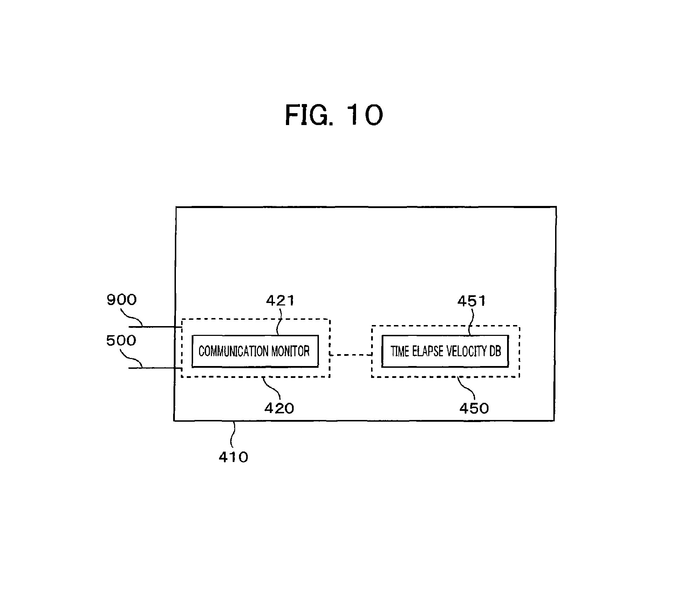

Fig. 10 shows the functional configuration of the communication monitoring device 400 and relation with physical each device. The CPU 420 included in the body 410 of the communication monitoring device 400 includes a communication monitor 421. The function of the communication monitor 421 is embodied by executing the action analyzation program 431 by the CPU 420.

The communication monitor 421 analyzes a packet included in the TCP communication between the sample 10 and the sample communication destination terminal 800, calculates time elapse velocity at which no time-out occurs in the TCP communication, and inputs a result of the calculation to the sample execution device 200 as the time elapse velocity change instruction 80. The details will be described later.

### (Description of process)

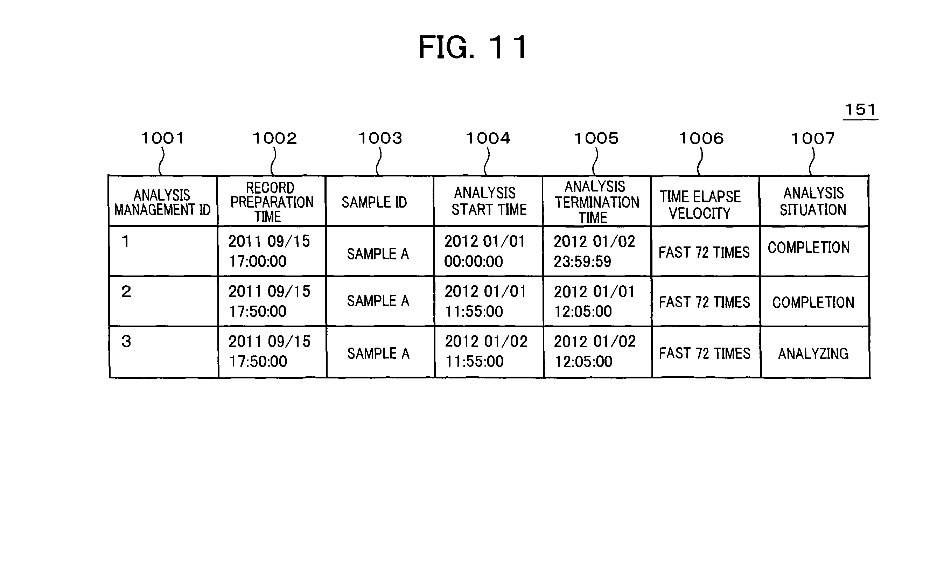

Fig. 11 and the followings show examples of the configuration of the DBs included in this system and flowcharts of each function part.

The examples of the configuration in Fig. 11 and the followings suppose that the sample 10 is analyzed according to the following procedure.

The system management device 100 starts the analysis of the sample 10 just at 17:00 on Sep. 15, 2011. In the analysis, the sample execution device 200 is instructed to execute processing for a sample A in a period of 48 hours since just midnight on Jan. 1, 2012 till 23:59:59 on Jan. 2, 2012 at time elapse velocity which is 72 times as fast as real time. That is, the processing in the period of 48 hours is executed in 40 minutes (48/72=2/3 hour). After the completion of the execution, the action analyzer 300 analyzes an action record and outputs a result of the analysis. As there is a period in which re-analysis is required referring to the result of the analysis, the system management device 100 re-analyzes the sample 10. In the re-analysis, the sample execution device 200 is instructed to execute the sample A in a period since 11:55:00 on Jan. 1, 2012 till 12:00:05 on Jan. 1, 2012 and in a period since 11:55:00 on Jan. 2, 2012 till 12:00:05 on Jan. 2, 2012 at the same time elapse velocity (velocity of 72 times) as the last time. As the re-analysis succeeds and a third analysis is judged to be not required, the analysis of the sample A is completed.

### (Various tables)

Fig. 11 shows the configuration of the analysis scenario DB 151. Each record in the analysis scenario DB 151 stores a method of analyzing a certain sample and a situation of the analysis. Each record is retained in the analysis scenario DB 151 at the time when the system management device 100 determines an analysis scenario 20.

Analysis management ID 1001 is used for uniquely recognizing each record in the analysis scenario DB 151. Therefore, a value of each analysis management ID 1001 is unique in the analysis scenario DB 151.

Record preparation time 1002 shows time at which each record is prepared. Time in the system management device 100 is applied to the record preparation time 1002.

Sample ID 1003 is a number for uniquely identifying each sample analyzed in this system. When the same sample ID 1003 is set in different records, it means that the same sample is analyzed on different conditions plural times.

Analysis start time 1004 (40) shows time at which the sample execution device 200 starts the execution of the sample 10 using time in the sample execution device 200. Therefore, a value greatly different from the record preparation time 1002 may be input. Analysis termination time 1005 (50) shows time at which the sample execution device 200 terminates the execution of the sample 10 using the time in the sample execution device 200. Therefore, a value greatly different from the record preparation time 1002 may be input.

Time elapse velocity 1006 (30) represents elapsed velocity in time managed by the timer 270 in the sample execution device 200 that executes the sample 10 by the scale factor of normal time elapse velocity. The time elapse velocity 1006 takes positive numbers. For example, when the time elapse velocity 1006 is velocity of 10 times, 10 seconds elapse in time managed by the timer 270 while one second elapses in a normal flow of time. Similarly, when the time elapse velocity 1006 is velocity of 0.1 times, 0.1 second elapses in time managed by the timer 270 while one second elapses in the normal flow of time. When no sample is executed though a scenario is input, "before analysis" is set in an analysis situation 1007.

In this embodiment, a lower limit value and an upper limit value of the time elapse velocity 1006, and grading (a scale of 0.1 and others) are not specified. However, the lower limit value or the upper limit value and the grading may be also determined depending upon the performance of the timer 270 of the sample execution device 200.

The analysis situation 1007 shows a situation in which the analysis scenario is executed. For a value which the analysis situation 1007 can take, completion or analyzing can be given. In the case of "completion", the execution of the analysis scenario and analysis are completed. In the case of "analyzing", a sample is being executed or a result of execution is being analyzed in the analysis scenario.

In Fig. 11, an example of three types of records in the analysis scenario is shown. As for the record having the analysis management ID of 1, record preparation time is 17:00 on Sep. 15, 2011 and a sample to be analyzed is a sample A. The system management device 100 instructs the sample execution device 200 to execute the sample A for 48 hours since just midnight on Jan. 1, 2012 till 23:59:59 on Jan. 2, 2012. Besides, as for the time elapse velocity 1006, velocity of 72 times is specified. Therefore, sample execution time in real time is 40 minutes (=48/72*60). The analysis situation 1007 is completion.

As for the record having the analysis management ID of 2, record preparation time is 17: 50 on Sep. 15, 2011 and a sample to be analyzed is the sample A as the record having the analysis ID of 1. The system management device 100 instructs the sample execution device 200 to execute the sample A for ten minutes since 11:55:00 on Jan. 1, 2012 till 12:05:00 on Jan. 1, 2012. Besides, for the time elapse velocity 1006, velocity of 72 times (the same as elapsed velocity in real time) is specified. Therefore, sample execution time in real time is 10 minutes. The analysis situation 1007 is completion.

As for the record having the analysis management ID of 3, record preparation time is 17: 50 on Sep. 15, 2011 and a sample to be analyzed is the sample A as the record having the analysis ID of 1. The system management device 100 instructs the sample execution device 200 to execute the sample A for 10 minutes since 11:55:00 on Jan. 2, 2012 till 12:05:00 on Jan. 2, 2012. Besides, for the time elapse velocity 1006, velocity of 72 times (the same as elapsed velocity in real time) is specified. Therefore, sample execution time in real time is 10 minutes. The analysis situation 1007 is "analyzing".

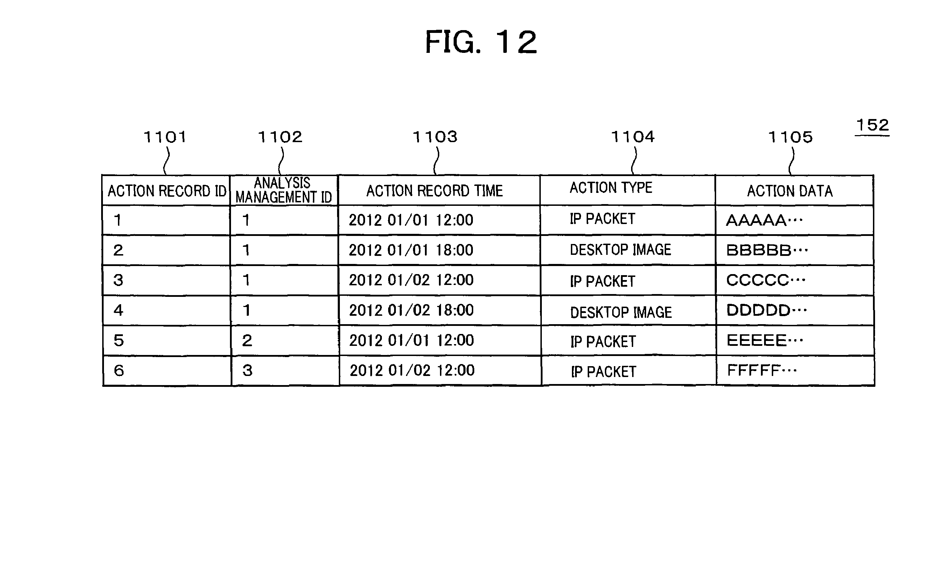

Fig. 12 shows the configuration of the action record DB 152. In the action record DB 152, the action record 60 of the sample 10 acquired by the action recorder 222 is recorded when the sample 10 is executed in the sample execution device 200. Concretely, it is specified in recording rule DB 251 described later what action record of the sample 10 is to be recorded.

Action record ID 1101 is used for uniquely recognizing each record in the action record DB 152. Therefore, a value of the action record ID 1101 is unique in the action record DB 152. Analysis management ID 1102 is specified by the analysis management ID 1001 of the record in the analysis scenario DB 151 to which each record in the action record DB 152 corresponds. That is, the corresponding record is the action record of the sample 10 recorded while the analysis scenario specified by the analysis management ID 1102 is executed.

Action record time 1103 includes time at which each record is recorded as time in the sample execution device 200. Therefore, the time may be greatly different from real time.

An action type 1104 shows what type of action is recorded. In Fig. 12, an Internet protocol (IP) packet and a desktop image are shown for an example. The IP packet means an IP packet transmitted or received by the sample 10. The desktop image means an image which is displayed on the input-output device 290 and which execution environment including the sample 10 produces. For another modified example of the action type 1104, a function called by the sample 10, a generated file and generated registry respectively generated while the sample 10 is executed can be given.

Action data 1105 means actually recorded data. When the action type 1104 is an IP packet, the corresponding action data 1105 is binary data of the IP packet. When the action type 1104 is a desktop image, the corresponding action data 1105 is image data of the desktop image.

In Fig. 12, an example of six types of records in the action record DB 152 is shown. The record having the action record ID 1101 of 1 is an action record acquired in the execution of the analysis management ID 1102 of 1. The action record time 1103 is 12:00:00 on Jan. 1, 2011, the action type 1104 is an IP packet, and the action data 1105 is "AAAAA---".

A record having the action record ID 1101 of 2 is an action record acquired in the execution of the analysis management ID 1102 of 1 as described above. The action record time 1103 is 18:00:00 on Jan. 1, 2011, the action type 1104 is a desktop image, and the action data 1105 is "BBBBB---".

A record having the action record ID 1101 of 3 is an action record acquired in the execution of the analysis management ID 1102 of 1 as described above. The action record time 1103 is 12:00:00 on Jan. 2, 2011, the action type 1104 is an IP packet, and the action data 1105 is "CCCCC---".

A record having the action record ID 1101 of 4 is an action record acquired in the execution of the analysis management ID 1102 of 1 as described above. The action record time 1103 is 18:00:00 on Jan. 2, 2011, the action type 1104 is a desktop image, and the action data 1105 is "DDDDD---".

A record having the action record ID 1101 of 5 is an action record acquired in the execution of the analysis management ID 1102 of 2. The action record time 1103 is 12:00:00 on Jan. 1, 2011, the action type 1104 is an IP packet, and the action data 1105 is "EEEEE---".

A record having the action record ID 1101 of 6 is an action record acquired in the execution of the analysis management ID 1102 of 3. The action record time 1103 is 12:00:00 on Jan. 2, 2011, the action type 1104 is an IP packet, and the action data 1105 is "FFFFF---".

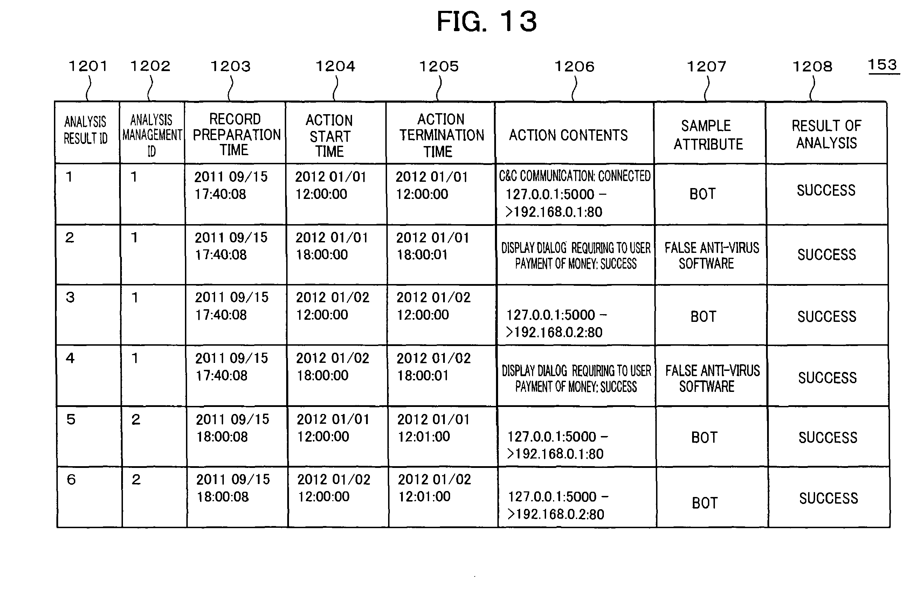

Fig. 13 shows the configuration of the analysis result DB 153. The analysis result DB 153 stores results of analysis 70 prepared by the action analyzer 300. Each record includes the contents and the time of action performed by the sample 10 respectively as a result of analysis by the action analyzer 300.

The analysis is made based upon the action record DB 152; however, the record in the action record DB 152 and the record in the analysis result DB 153 are not required to correspond by one to one. For example, plural analysis result records may be prepared from one record of an action record and one analysis result record may be prepared from plural analysis result records.

Analysis result ID 1201 is used for uniquely recognizing each record in the analysis result DB 153. Therefore, a value of the analysis result ID 1201 is unique in the analysis result DB 153. Analysis management ID 1202 specifies the record in the analysis scenario DB 151 to which each record in the analysis result DB 152 corresponds with analysis management ID. That is, the corresponding record is a result of analyzing an action record prepared while an analysis scenario specified by the analysis management ID 1202 is executed.

In record preparation time 1203, time at which the record is prepared is recorded using time in the action analyzer 300. In action start time 1204, time at which action that the record shows is started is recorded using time in the sample execution device 200 while the sample 10 is executed. Therefore, the action start time 1204 may be greatly different from real time. In action termination time 1205, time at which action that the record shows is terminated is recorded using time in the sample execution device 200 while the sample 10 is executed. Therefore, the action termination time 1205 may be greatly different from real time.

Action contents 1206 show the contents of the action of the sample 10 clarified as a result of analysis. A sample attribute 1207 shows an attribute of the sample 10 clarified based upon the action contents 1206, that is, into what group of malware the sample 10 is classified. When the sample attribute 1207 cannot be determined based upon the action contents 1206, "unknown" is recorded. The sample attribute 1207 is set based upon information which is prepared beforehand and in which malware is classified into groups according to characteristics of the action contents of the malware.

A result of analysis 1208 shows whether analysis that the record shows succeeds or not. When the analysis succeeds, "success" is described and when the analysis fails, "failure" is described. The result of analysis is determined depending upon whether the sample attribute 1207 can be determined based upon the action contents 1206 or not. As described later, when the result of analysis 1208 is "failure", the system management device 100 changes an analysis scenario and may re-analyze. The success of analysis means a case in which the action contents 1206 and the sample attribute 1207 are clarified.

In Fig. 13, an example of six types of records in the analysis result DB 153 is shown.

The record having the analysis result ID 1201 of 1 is a record prepared as a result of an analysis scenario having the analysis management ID 1202 of 1. The preparation time of the record is 17:40:08 on Sep. 15, 2011. According to analysis contents of the corresponding record, malware of a type called "bot" which has a function for exchanging with an external device and which is a computer virus makes "C&C communication" via a No. 80 port according to a transfer control protocol (TCP) of another terminal the IP address of which is 192. 168. 0. 1 from an IP address (127. 0. 0. 1) of the sample execution device 200 in a period since 12:00:00 on Jan. 1, 2011 till 12:00:00 on Jan. 1, 2011. Therefore, the sample attribute 1207 is "bot" and the result of analysis 1208 is "success".

The record having the analysis result ID 1201 of 2 is a record prepared as a result of the analysis scenario having the analysis management ID 1202 of 1. The preparation time of the record is 17:40:08 on Sep. 15, 2011. According to analysis contents of the corresponding record, a dialog that requires a user to pay money is displayed in a period since 18:00:00 on Jan. 1, 2011 till 18:01:00 on Jan. 1, 2011. This is action proper to malware called false anti-virus software. Therefore, the sample attribute 1207 is false anti-virus software and the result of analysis 1208 is "success".

The record having the analysis result ID 1201 of 3 is a record prepared as a result of the analysis scenario having the analysis management ID 1201 of 1. The preparation time of the record is 17:40:08 on Sep. 15, 2011. According to the action contents 1206 of the corresponding record, malware of a type called bot which has a function for exchanging with an external device and which is a computer virus makes C&C communication via the No. 80 port according to TCP of another terminal the IP address of which is 192. 168. 0. 2 from the IP address (127. 0. 0. 1) of the sample execution device 200 in a period since 12:00:00 on Jan. 2, 2011 till 12:00:00 on Jan. 2, 2011. Therefore, the sample attribute 1207 is bot and the result of analysis 1208 is success.

The record having the analysis result ID 1201 of 4 is a record prepared as a result of the analysis scenario having the analysis management ID 1202 of 1. The preparation time of the record is 17:40:08 on Sep. 15, 2011. According to the action contents 1206 of the corresponding record, a dialog that requires a user to pay money is displayed in a period since 18:00:00 on Jan. 2, 2011 till 18:01:00 on Jan. 2, 2011. Therefore, the sample attribute 1207 is false anti-virus software and the result of analysis 1208 is success.

The record having the analysis result ID 1201 of 5 is a record prepared as a result of an analysis scenario having the analysis management ID 1202 of 2. The preparation time of the record is 18:00:08 on Sep. 15, 2011. According to the action contents 1206 of the corresponding record, malware of a type called bot which has a function for exchanging with an external device and which is a computer virus makes C&C communication via the No. 80 port according to TCP of another terminal the IP address of which is 192. 168. 0. 1 from the IP address (127. 0. 0. 1) of the sample execution device 200 in a period since 12:00:00 on Jan. 1, 2011 till 12:01:00 on Jan. 1, 2011. Therefore, the sample attribute 1207 is bot and the result of analysis 1208 is success.

The record having the analysis result ID 1201 of 6 is a record prepared as a result of an analysis scenario having the analysis management ID 1202 of 3. The preparation time of the record is 18:00:08 on Sep. 15, 2011. According to the action contents 1206 of the corresponding record, C&C communication is made via the No. 80 port according to TCP of another terminal the IP address of which is 192. 168. 0. 1 from the IP address (127. 0. 0. 1) of the sample execution device 200 in a period since 12:00:00 on Jan. 2, 2011 till 12:01:00 on Jan. 2, 2011. Therefore, the sample attribute 1207 is bot and the result of analysis 1208 is success.

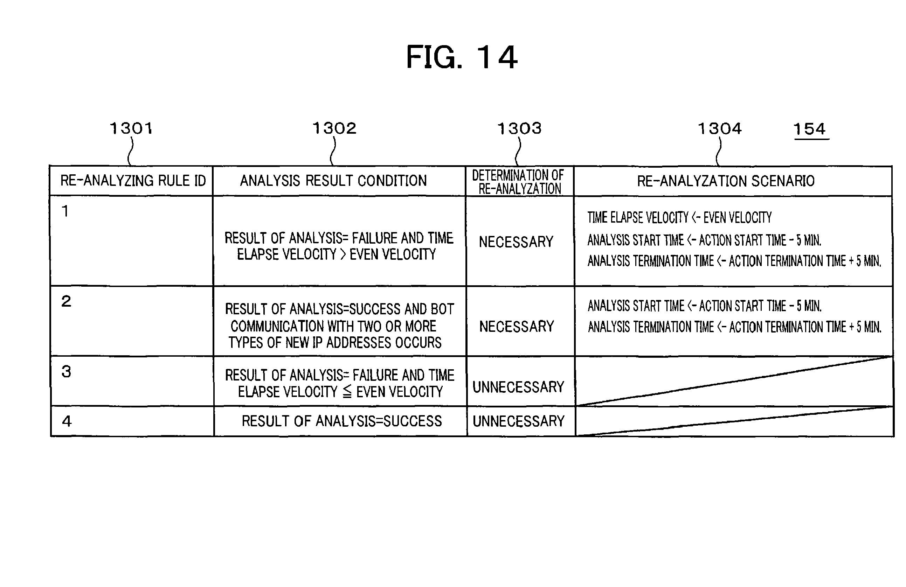

Fig. 14 shows the configuration of the re-analyzing rule DB 154. The re-analyzing rule DB 154 is used for the system management device 100 to judge whether the sample 10 is required to be re-analyzed based upon the contents of the analysis result DB 153 or not. Each record is configured according to the correspondence of a condition which the record in the analysis result DB 153 should meet to whether re-analysis is required when the condition is met or not.

Re-analyzing rule ID 1301 is used for uniquely identifying each record. Therefore, a value of the re-analyzing rule ID 1301 is unique in the re-analyzing rule DB 154.

An analysis result condition 1302 shows a condition which the record in the analysis result DB 153 should meet to apply a re-analyzing rule. The condition 1302 is represented as a logical expression using each column of the record in the analysis result DB 153 and each column of the record in the analysis scenario DB 151 referred from the corresponding record.

The determination of re-analyzation 1303 defines a result of determination of whether re-analyzation is made when the record in the analysis result DB 153 meets the analysis result condition 1302 or not. The determination of re-analyzation 1303 has two values of "necessary" or "unnecessary". In the case of "necessary", re-analyzation is made. In the case of "unnecessary", no re-analyzation is made.

A re-analyzation scenario 1304 shows modified contents of a scenario newly prepared for determining the analysis scenario 20 again when the determination of re-analyzation 1303 is "necessary". Concretely, the analysis scenario is modified based upon the re-analyzation scenario 1304, referring to a value of the record in the analysis result DB 153 and each column newly added of the record in the analysis scenario DB 151 determines a value to be taken. The re-analyzation scenario 1304 of the record the determination of re-analyzation 1303 of which is "unnecessary" is blank.

In Fig. 14, an example of four types of records in the re-analyzing rule DB 154 is shown.

The record having the re-analyzing rule ID of 1 is applied when in the analysis result condition 1302, the result of analysis 1208 is "failure" and the time elapse velocity 1006 is higher than even velocity. As the determination of re-analyzation 1303 is "necessary", re-analyzation is performed. In the re-analyzation scenario 1304, the analysis scenario 20 is instructed to be modified so that the time elapse velocity 1006 is converted to even velocity, the analysis start time 1004 is "a value of the action start time 1204 - 5 min." and the analysis termination time 1005 is "a value of the action termination time 1205 + 5 min.".

The record having the re-analyzing rule ID of 2 is applied when in the analysis result condition 1302, the result of analysis 1208 is "success" and BOT communication with two or more new IP addresses is observed in the analysis. As the determination of re-analyzation 1303 is "necessary", re-analyzation is performed. In the re-analyzation scenario 1304, the time elapse velocity 1006 is similar to that in current analysis and the analysis scenario 20 is instructed to be modified so that the analysis start time 1004 is "the value of the action start time 1204 - 5 min." and the analysis termination time 1005 is "the value of the action termination time 1205 + 5 min.". For example, as BOT communication with two types of IP addresses of 192. 168. 0. 1 and 192. 168. 0. 2 respectively corresponding to the analysis result IDs 1201 of 1 and 3 occurs when the analysis management ID 1202 shown in Fig. 13 is 1, the analysis result condition 1302 is met.

The record having the re-analyzing rule ID of 3 is applied when in the analysis result condition 1302, the result of analysis 1208 is "failure" and the time elapse velocity 1006 is even or less velocity. In this case, as the determination of re-analyzation 1303 is "unnecessary", no re-analyzation is made. Therefore, the re-analyzation scenario 1304 is blank.

The record having the re-analyzing rule ID of 4 is applied when in the analysis result condition 1302, the result of analysis 1208 is "success". In this case, as the determination of re-analyzation 1303 is "unnecessary", no re-analyzation is made. Therefore, the re-analyzation scenario 1304 is blank.

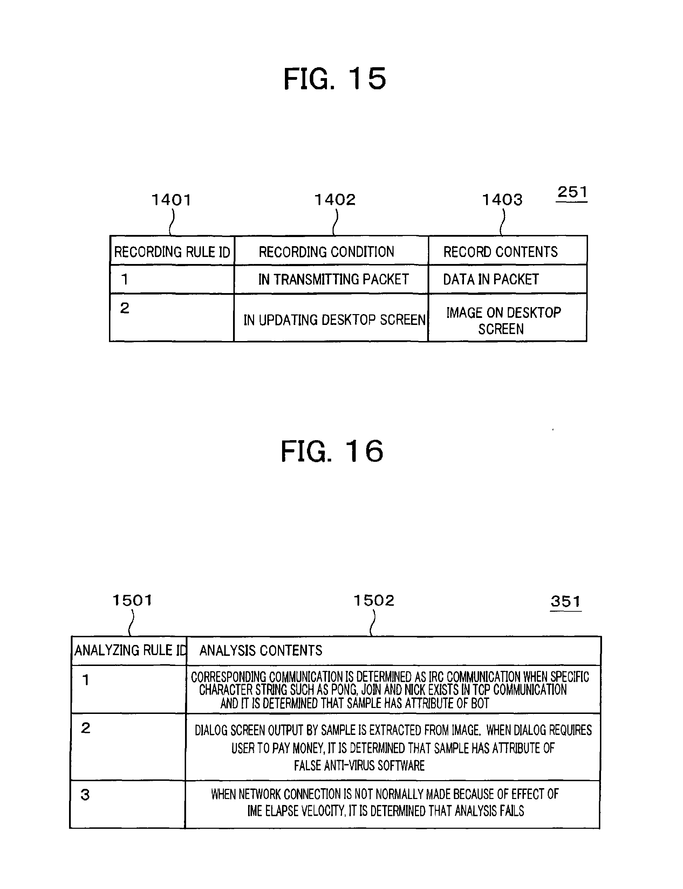

Fig. 15 shows the configuration of the recording rule DB 251. The recording rule DB 251 determines what of the actions of the sample 10 the action recorder 222 records.

Recording rule ID 1401 is used for uniquely identifying each record of the recording rule DB 251. Therefore, a value of the recording rule ID 1401 is unique in the recording rule DB 251.

A recording condition 1402 specifies that action is recorded when what condition the action of the sample 10 meets. Record contents 1403 concretely specifies contents of information to be recorded. The action recorder 222 is provided with a function that can judge whether the sample 10 performs action corresponding to the recording condition 1402 or not and a function that can record information specified by the record contents 1403.

In Fig. 15, an example of two types of records in the recording rule DB 251 is shown.

As the record having the recording rule ID 1401 of 1, data in a packet is recorded as shown in the record contents 1403 when the recording condition 1402 is "in transmitting the packet". Concretely, the action recorder 222 can observe action that meets the recording condition 1402 by observing the interface 240. Further, the action recorder can acquire information shown in the recording condition 1403 by acquiring packet data from the interface 240.

As the record having the recording rule ID 1401 of 2, an image on a desktop screen is recorded as shown in the record contents 1403 when the recording condition 1402 is "in updating the desktop screen". Concretely, the action recorder 222 can observe action that meets the recording condition 1402 by observing the input-output device 290. Further, the action recorder can acquire information shown in the record contents 1403 by acquiring image data from the input-output device 290.

For another example not shown in Fig. 15, a call from a specific function of the sample 10 is observed by monitoring the memory 230 related to the execution of the sample 10, and an argument passed to the function and a result of the execution of the function can be recorded. Besides, the information of a file and registry prepared or modified by the sample 10 can be observed and acquired by monitoring the image storage 280.

Fig. 16 shows the configuration of the analyzing rule DB 351. The action analyzer 321 reads records in the analyzing rule DB 351 and makes analysis specified in the records in the analyzing rule DB 351.

Analyzing rule ID 1501 is used for uniquely identifying each record of the analyzing rule DB 351. Therefore, a value of the analyzing rule ID 1501 is unique in the analyzing rule DB 351. In analysis contents 1502, a concrete analyzing method is described.

In Fig. 16, an example of three types of records in the analyzing rule DB 351 is shown.

The record having the analyzing rule ID 1501 of 1 shows that when a specific character string such as PONG, JOIN and NICK exists in TCP communication shown in the record in the analyzing rule DB 351, the communication is determined as Internet relay chat (IRC) communication and it is judged that the sample 10 has an attribute of bot. Besides, a result of the analysis of the corresponding record is "the success of analysis".

The record having the analyzing rule ID 1501 of 2 shows that a dialog screen output by the sample is executed from an image shown in the record in the analyzing rule DB 351. When the extracted dialog requires a user to pay money, it is judged that the sample 10 has an attribute of false anti-virus software. Besides, a result of the analysis of the corresponding record is determined as the success of analysis.

The record having the analyzing rule ID 1501 of 3 shows that when a case that network connection is not normally made because of an effect by the adjustment of time elapse velocity is found from the record in the analyzing rule DB 351, it is judged that an attribute of the sample 10 is unknown. Besides, a result of the analysis of the corresponding record is the failure of analysis.

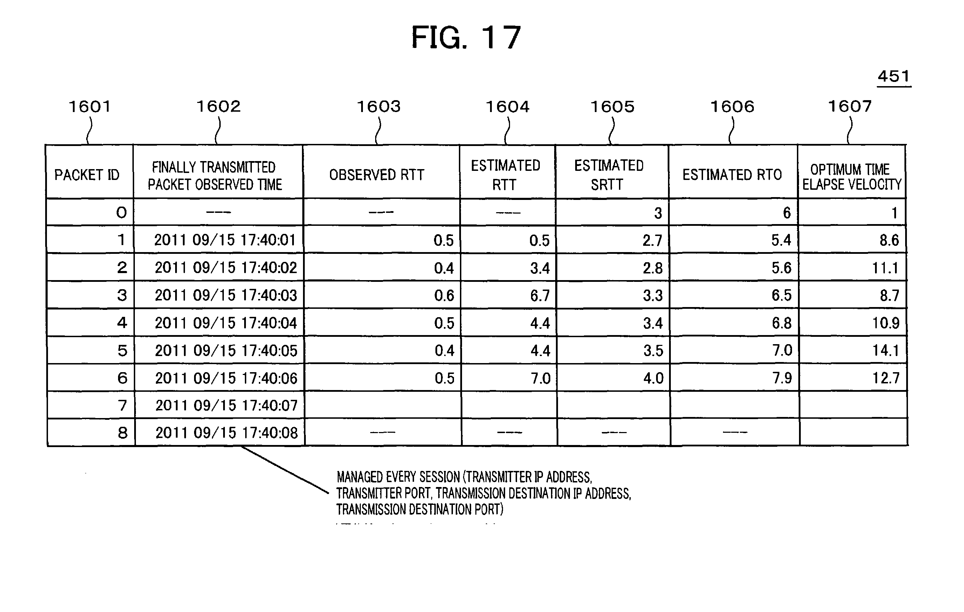

Fig. 17 shows the configuration of the time elapse velocity DB 451. The communication monitor 421 calculates time elapse velocity at which no TCP time-out occurs referring to the time elapse velocity DB 451. In each record shown in Fig. 17, a result of calculating time elapse velocity every time a packet is received is stored.

The time-out is a phenomenon that a response TCP packet from the sample communication destination terminal 800 to a TCP packet (hereinafter called a transmitted TCP packet) transmitted by the sample 10 is not received within certain threshold time (retransmission time out (RTO)) in a TCP session. As the retransmission of a TCP packet is performed and packet transmission is inhibited when time-out occurs, the deterioration of transmission speed and the disconnection of communication occur. The difference between time required by transmitting a certain TCP packet and time required by receiving the corresponding response TCP packet is called round trip time (RTT).

As RTO set in the sample execution device 200 is relatively shorter than real time when time elapse velocity is set to even or more velocity, time-out often occurs. For example, when the sample execution device 200 where OS in which normal RTO is set to 6 seconds is executed is operated at the time elapse velocity of 10 times, time-out occurs when no response TCP packet reaches within 0.6 second converted to real time. Therefore, the communication monitor 421 sets time elapse velocity having as a large value as possible in a range that does not exceed RTO when TCP communication is made in the sample execution device 200. As RTO held by the sample execution device 200 varies according to a communication situation, the communication monitor 421 estimates a current RTO value of the sample execution device 200 and calculates time elapse velocity based upon this value.

TCP has various methods of calculating RTO at certain time, however, in this embodiment, RTO shall be calculated by doubling an average of RTT (hereinafter called smoothed RTT (SRTT)) after the initiation of a session, that is, in an expression that RTO = 2 x SRTT. SRTT is updated every time a response TCP packet is received. In this embodiment, when a response TCP packet in which a current SRTT value is A seconds and RTT is B seconds is received, a value of updated SRTT shall be acquired in an expression that A x 0.875 + B x 0.125. Generally, when SRTTs at time tₙ₊₁ and at time tₙ are SRTT (n+1) and SRTT (n), RTT at time tₙ is RTT(n) and a predetermined constant k (the weight of the average) is 0.875 (7/8), SRTT (n+1) is acquired in an expression that k·SRTT (n) + (1-k)·RTT (n). When SRTT (n+1) is represented using each RTT (i)(i=1 to n), SRTT (n+1) = kⁿ· SRTT (1) + (1 - k)(RTT (n) + k·RTT (n-1) + --- + kⁿ⁻¹·RTT (1)) and when SRTT (1) = 0 as an initial value, SRTT (n+1) = (1-k) (RTT (n) + k·RTT (n-1) + --- + kⁿ⁻¹·RTT (1)). This shows that weight for RTT (i) becomes smaller in terms of an exponential function from the present (n) toward the past. That is, this shows that past RTT (i) less contributes to SRTT (the average). For a method of calculating RTO and SRTT, another expression may be also used.

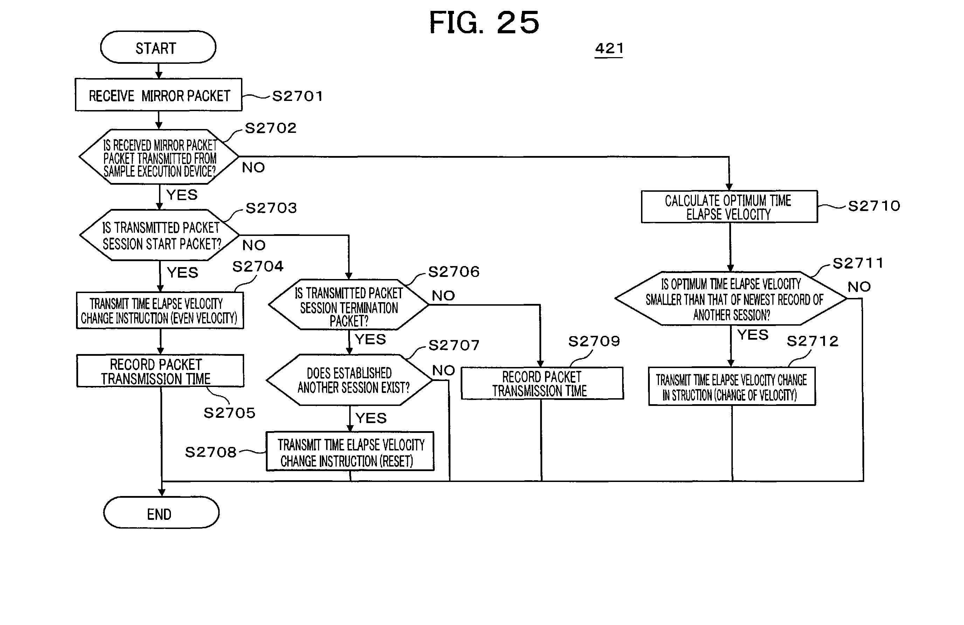

Each record in the time elapse velocity DB 451 is added every TCP packet transmitted by the sample 10. Therefore, when the sample 10 makes plural TCP sessions (distinguished in the combination of four items of a transmitter IP address, a transmitter port, a transmission destination IP address and a transmission destination port), entries corresponding to TCP packets which belong to the plural sessions are actually registered in the time elapse velocity DB 451. However, as the communication monitor 421 processes in units of session, the time elapse velocity DB 451 is provided with a function that manages a record every session by putting plural tables to proper use for example. In an example shown in Fig. 17 and the following, one TCP session established between the sample 10 and the sample communication destination terminal 800 will be described for simplification. Processing for the sample 10 to establish plural TCP sessions is shown in Fig. 25.

Packet ID 1601 is used for uniquely identifying a transmitted TCP packet in a certain TCP session. In a record having the packet ID 1601 of 0, an initial value of RTO and others is set and this will be described later. A first transmitted TCP packet in a session is recorded as 1 in a field of the packet ID 1601.

In finally transmitted packet observed time 1602, the observed time of the corresponding transmitted TCP packet is recorded. This time is real time because the time is calculated using a clock in the communication monitor 421.

In observed RTT 1603, time since the corresponding TCP packet is transmitted until the corresponding response TCP packet is received is recorded. This time is real time because the time is calculated using the clock in the communication monitor 421.

Estimated RTT 1604 is an RTT value in a clock in the sample execution device 200 and can be acquired by multiplying the observed RTT 1603 by time elapse velocity currently set in the sample execution device 200.

Estimated SRTT 1605 is an SRTT value in the clock in the sample execution device 200. In this embodiment, estimated SRTT 1605 of the record having the packet ID 1601 of N is acquired in an expression that (a value of estimated SRTT 1605 of the record having the packet ID 1601 of N-1) x 0.875 + (estimated RTT 1604 of the record having the packet ID 1601 of N) x 0.125.

Estimated RTO 1606 is an RTO value in the clock in the sample execution device 200 which is acquired based upon the estimated SRTT 1605. In this embodiment, a value of the estimated RTO 1606 is equivalent to the double of the value of the estimated SRTT 1605.

Optimum time elapse velocity 1607 is optimum time elapse velocity in a state of the current session and is calculated based upon the estimated RTO 1606 and the observed RTT 1603. In this embodiment, optimum time elapse velocity 1607 when a response TCP packet having the packet ID 1601 of N is observed is calculated in an expression that ( (estimated RTO 1606 having the packet ID 1601 of N) x 0.8)/(observed RTT 1603 having the packet ID 1601 of N). The optimum time elapse velocity 1607 may be also calculated using the past observed RTT 1603 the packet ID 1601 of which is N-1 or less.

When another established session does not exist, the optimum time elapse velocity 1607 is transmitted to the sample execution device 200 as a time elapse velocity change instruction 80. As the time elapse velocity change instruction 80 is transmitted in a method except communication such as a TCP session in which time-out may occur, the sample execution device 200 can normally receive the time elapse velocity change instruction 80 independent of a value of time elapse velocity. Processing when established another session exists will be described later. A case that another session does not exist will be described below.

In Fig. 17, an example of nine types of records in the time elapse velocity DB 451 is shown.

In the record having the packet ID 1601 of 0, "6 seconds" is preset as an initial vale of the estimated RTO 1606, "6 seconds" is preset as an initial value of time elapse velocity, and "even velocity" is preset as an initial value of the optimum time elapse velocity 1607. Therefore, when the sample 10 observes a TCP transmitted packet for starting a TCP session, the communication monitoring device 400 transmits a time elapse velocity change instruction 80 for varying time elapse velocity to even velocity to the sample execution device 200.

In the record having the packet ID 1601 of 1, 17:40:01 on Sep. 15, 2011 as the finally transmitted packet observed time 1602, 0.5 second as the observed RTT 1603, 0.5 second as the estimated RTT 1604, 2.7 seconds as the estimated SRTT 1605, 5.4 seconds as the estimated RTO 1606 and velocity of 8.6 times as the optimum time elapse velocity 1607 are set. This means that the observed time of a first transmitted TCP packet of the sample 10 is 17:40:01 on Sep. 15, 2011, its response TCP packet reaches after 0.5 second and a time elapse velocity change instruction 80 for varying time elapse velocity to velocity of 8.6 times is transmitted to the sample execution device 200.

Similarly, in the record having the packet ID 1601 of 2, 17:40:02 on Sep. 15, 2011 as the finally transmitted packet observed time 1602, 0.4 second as the observed RTT 1603, 3.4 seconds as the estimated RTT 1604, 2.8 seconds as the estimated SRTT 1605, 5.6 seconds as the estimated RTO 1606 and velocity of 11.1 times as the optimum time elapse velocity 1607 are set. This means that the observed time of a second transmitted TCP packet of the sample 10 is 17: 40: 02 on Sep. 15, 2011, its response TCP packet reaches after 0.4 second and a time elapse velocity change instruction 80 for varying time elapse velocity to velocity of 11.1 times is transmitted to the sample execution device 200.

Similarly, in the record having the packet ID 1601 of 3, 17:40:03 on Sep. 15, 2011 as the finally transmitted packet observed time 1602, 0.6 second as the observed RTT 1603, 6.7 seconds as the estimated RTT 1604, 3.3 seconds as the estimated SRTT 1605, 6.5 seconds as the estimated RTO 1606 and velocity of 8.7 times as the optimum time elapse velocity 1607 are set. This means that the observed time of a third transmitted TCP packet of the sample 10 is 17: 40: 03 on Sep. 15, 2011, its response TCP packet reaches after 0.6 second and a time elapse velocity change instruction 80 for varying time elapse velocity to velocity of 8.7 times is transmitted to the sample execution device 200.

As for the records having the packet IDs 1601 of 4 to 7, the similar processing is also performed.

In the record having the packet ID 1601 of 8, 17:40:08 on Sep. 15, 2011 is set as the finally transmitted packet observed time 1602 and RESET is described in the optimum time elapse velocity 1607. This occurs when a packet that terminates an established TCP session is transmitted from the sample 10. In this case, a time elapse velocity change instruction 80 for making time elapse velocity RESET is transmitted to the sample execution device 200.

### (Details of procedure)

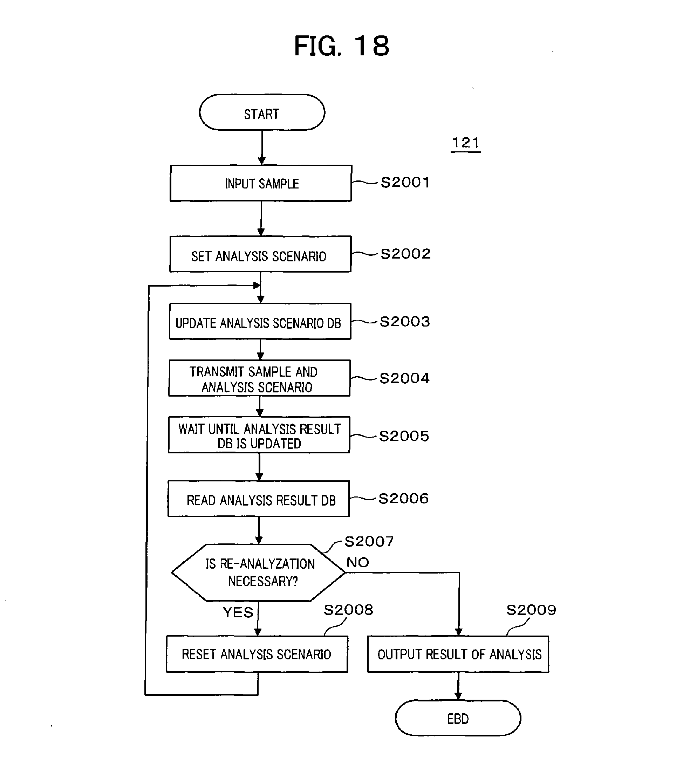

Fig. 18 is a flowchart showing a process by the analysis manager executed in the analysis manager 121. In this flowchart, a series of flow since the sample is input until the analysis is completed is shown. That is, Fig. 18 is a flowchart showing an outline of processing in this embodiment.

In a step S2001, the sample 10 is input to the analysis manager 121 via the system management device 100. For a method of input, the sample 10 may be also input from another terminal via the interface 140 and may be also input via the input-output device 180. The input sample 10 is retained in the sample storage 170.

In a step S2002, the analysis manager 121 determines the analysis scenario 20. Concretely, the analysis manager determines the time elapse velocity 30, the analysis start time 40 and the analysis termination time 50. A value determined in each item may be also a predetermined standard value and an analyst may also register it via the input-output device 180 every time.

In a step S2003, the analysis manager 121 stores the analysis scenario 20 determined in the step S2002 in the analysis scenario DB 151. At this time, a unique value is registered in the analysis management ID 1001, 1102, 1202, stored time is registered in the record preparation time 1002, 1203, and "analyzing" is registered in the analysis situation 1007.

In a step S2004, the sample 10 and one or more analysis scenarios 20 are transmitted to the sample executor 221 of the sample execution device 200 from the analysis manager 121 via the line 1.

In a step S2005, the analysis manager 121 waits until a new record is added to the analysis result DB 153, that is, until the analysis of action by the action analyzer 321 in the action analyzer 300 is completed. For a method of notifying the analysis result DB 153 that a new record is added, a mechanism that transmits a signal to the analysis manager 121 may be also provided in the analysis result DB 153 and a mechanism in which notice is directly transmitted from the action analyzer 321 to the analysis manager 121 may be also provided.

In a step S2006, the analysis manager 121 reads the analysis result DB 153 and acquires a newly added record.

In a step S2007, the analysis manager 121 determines whether re-analyzation is required based upon the read analysis result DB 153 or not. For a basic policy, when one or more records judged "necessary" in the determination of re-analyzation 1303 according to the records in the re-analyzing rule DB 154 exist in the analysis result DB 153, re-analyzation is judged to be required. Besides, the records in the analysis result DB 153 are presented to the manager via the input-output device 180 and final judgment may be also made.

In a step S2008, when re-analyzation is judged to be necessary (YES) in the step S2007, the analysis manager 121 resets the analysis scenario according to the records in the re-analyzing rule DB 154. After reset, processing is returned to the step S2003.

In a step S2009, when re-analyzation is judged to be unnecessary (NO) in the step S2007, the analysis manager 121 outputs a result of analysis. For contents of output, the records in the analysis scenario DB 151 and the analysis result DB 153 may be also presented to the manager via the input-output device 180 and may be also transmitted to another device via the network 500.

Next, a concrete example of processing executed in Fig. 18 will be described using an example of the records shown in Figs. 11, 13 and 14.

First, in the step S2001, the analysis manager 121 acquires the sample A and retains it in the sample storage 170. In the step S2002, for an analysis scenario of the sample A, velocity of 72 times as the time elapse velocity 30, 00:00:00 on Jan. 1, 2012 as the analysis start time 40 and 23:59:59 on Jan. 2, 2012 as the analysis termination time 50 are determined.

In the step S2003, the determined analysis scenario is stored as the record having the analysis management ID of 1 in the analysis scenario DB 151. In the step S2004, the sample A and the analysis scenario 20 corresponding to the analysis management ID of 1 are transmitted to the sample execution device 200. In the step S2005, the analysis manager waits until the four records having the analysis result IDs 1201 of 1, 2, 3, 4 are output to the analysis result DB 153. In the step S2006, the records having the analysis result IDs 1201 of 1 to 4 in the analysis result DB 153 are read.

In the step S2007, as BOT communication is made with two new IP addresses 192. 168. 0. 1 and 192. 168. 0. 2 as shown in the action contents 1206 of the records having the analysis result IDs 1201 of 1 and 3 in the analysis result DB 153, re-analyzation is judged to be necessary (YES) based upon the record having the re-analyzing rule ID of 2 in the re-analyzing rule DB 154.

In the S2008, the analysis scenario 20 is reset based upon the re-analyzing rule DB 154. Concretely, for the analysis scenario 20 corresponding to the record having the analysis result ID 1201 of 1, "the time elapse velocity 30 is velocity of 72 times, the analysis start time 40 is 11:55:00 on Jan. 1, 2012 and the analysis termination time 50 is 12:05:00 on Jan. 2, 2012" is reset, and for the analysis scenario 20 corresponding to the record having the analysis result ID of 3, "the time elapse velocity 30 is even velocity, the analysis start time 40 is 00:00:00 on Jan. 1, 2012 and the analysis termination time 50 is 23:59:59 on Jan. 2, 2012" is reset.

Processing is returned to the step S2003 and the two analysis scenarios 20 determined in the step S2008 are stored in the analysis scenario DB 151 as the records having the analysis management IDs of 2 and 3.

In the step S2004, the sample A and the analysis scenarios 20 reset in the step S2008 are transmitted to the sample execution device 200. In the step S2005, the analysis manager waits until the two records having the analysis result IDs 1201 of 5 and 6 are output to the analysis result DB 153. In the step S2006, the records having the analysis result IDs 1201 of 5 and 6 in the analysis result DB 153 are read.

In the step S2007, as BOT connection to a new IP address does not exist in the action contents 1206 of the records having the analysis result IDs 1201 of 5 and 6 in the analysis result DB 153, re-analyzation is judged to be unnecessary (NO) based upon the record having the re-analyzing rule ID 1301 of 4 in the re-analyzing rule DB 154.

In the step S2009, a message that the sample A performs action proper to false anti-virus software that displays a dialog which requires a user to pay money at 18:00 on Jan. 1, 2012 and at 18:00 on Jan. 2, 2012. Besides, the sample A performs action proper to bot that makes C&C communication with the No. 80 port having the address of 192. 168. 0. 1 at 12:00 on Jan. 1, 2012 and at 12:00 on Jan. 2, 2012 is displayed via the input-output device 180 according to the records having the analysis result IDs of 2, 4, 5, 6 in the analysis result DB 153.

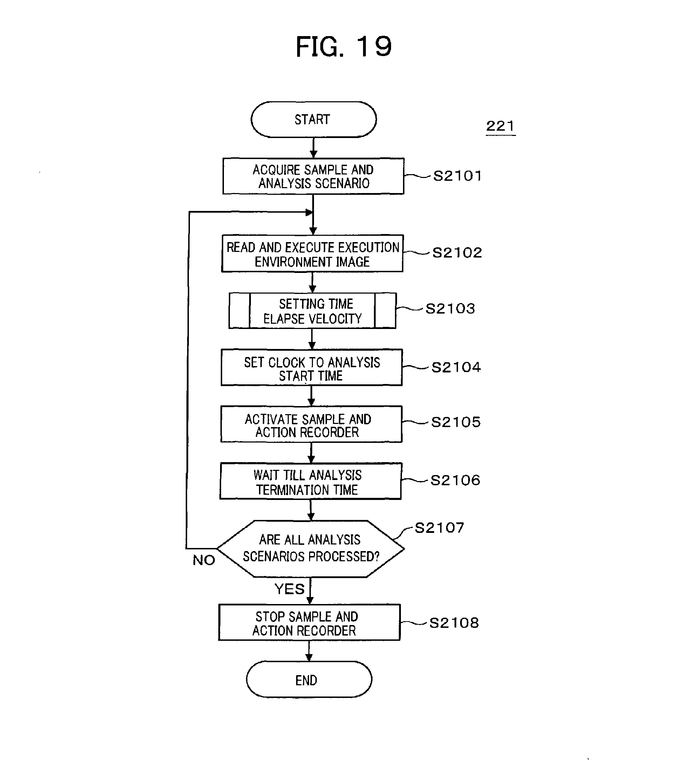

Fig. 19 is a flowchart showing a sample execution process executed by the sample executor 221 of the sample execution device 200.

In a step S2101, the sample executor 221 receives the sample 10 and one or more analysis scenarios 20 from the analysis manager 121 of the system management device 100.

In a step S2102, an execution environment image 281 is read from the image storage 280, is stored in the memory 230, and is executed.

In a step S2103, time elapse velocity in execution environment is set according to the time elapse velocity 30 in the analysis scenario 20. A concrete method will be described later.

In a step S2104, the clock 223 of the sample execution device 200 is accessed and current time is set to the analysis start time 40 in the analysis scenario 20. In a step S2105, the sample 10 and the action recorder 222 respectively received in the step S2101 are activated. In a step S2106, it is awaited that current time which the clock 223 shows becomes the analysis termination time 50 in the analysis scenario 20.

In a step S2107, it is checked whether the execution of samples in all analysis scenarios 20 received in the step S2101 is completed or not. When a result of the step S2107 is YES, the sample 10 and the action recorder 222 are stopped in a step S2108 and the processing is completed. When the result of the step S2107 is NO, processing is returned to the step S2102, the execution environment image 281 is read again, and the sample 10 is executed according to the unprocessed analysis scenario 20.

Next, a concrete example of a process performed in Fig. 19 will be described using the example of the records shown in Fig. 11.

First, in the step S2101, the sample executor 221 receives the analysis scenario 20 and the sample A respectively corresponding to the record having the analysis management ID of 1 in the analysis scenario DB 151 from the analysis manager 121.

In the step S2102, the execution environment image 281 for executing the sample A is read. In the step S2103, time elapse velocity in execution environment is set to velocity of 72 times. In the step S2104, current time of the clock 223 is set to 00:00:00 on Jan. 1, 2012. In the step S2105, the sample A and the action recorder 222 are executed. In the step S2106, it is awaited that current time of the clock 223 becomes 23: 59: 59 on Jan. 2, 2012.

In the step S2107, as the processing of all the analysis scenarios 20 is completed, the sample A and the action recorder 222 are stopped in the step S2108.

Afterward, in the step S2101, the sample executor 221 receives two analysis scenarios 20 and the samples A equivalent to the records having the analysis management IDs 1001 of 2 and 3 in the analysis scenario DB 151 from the analysis manager 121.

In the step S2102, the execution environment image 281 for executing the sample A is read. In the step S2103, time elapse velocity 30 in execution environment is set to velocity of 72 times according to the analysis scenario 20 equivalent to the record having the analysis management ID 1001 of 2.

In the step S2104, current time of the clock 223 is set to 11:55:00 on Jan. 1, 2012. In the step S2105, the sample A and the action recorder 222 are executed. In the step S2106, it is awaited that current time of the clock 223 becomes 12: 00: 05 on Jan. 1, 2012.

In the step S2107, as the processing of the analysis scenario 20 corresponding to the record having the analysis management ID of 3 is not executed yet, processing is returned to the step S2102. Afterward, in the steps S2103 to 2106, the sample is executed according to the analysis scenario 20.

In the step S2107, as the processing of the received two analysis scenarios 20 is all completed, the processing of the sample A and the action recorder 222 is stopped in the step S2108 and all the processing is finished.

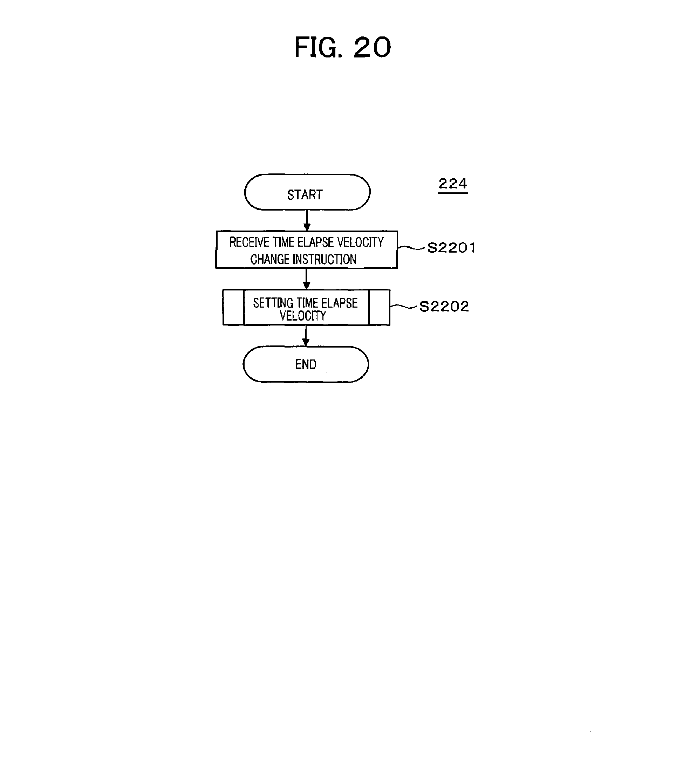

Fig. 20 is a flowchart showing a time elapse velocity change process executed in the time elapse velocity changer 224 of the sample execution device 200.

In a step S2201, the time elapse velocity changer 224 receives a time elapse velocity change instruction 80 from the communication monitoring device 400. In the time elapse velocity change instruction 80, a changed value of time elapse velocity (for example, 5.0 times) or a RESET code is described.

In a step S2202, time elapse velocity is changed according to the time elapse velocity change instruction. When the changed value is described in the time elapse velocity change instruction, time elapse velocity is changed to the value and when the RESET code is described, the time elapse velocity of the sample execution device 200 is set to a value of the time elapse velocity 30 received from the system management device 100.

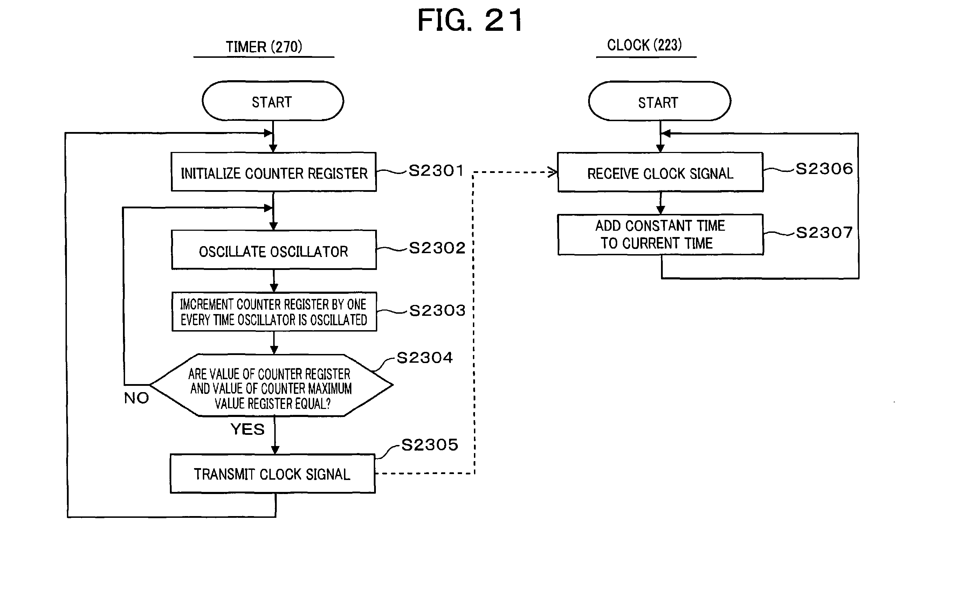

Fig. 21 shows relation between the timer 270 and the clock 223. As described above, the timer 270 transmits a signal to the clock 223 every time the oscillator 271 oscillates and the clock 223 determines current time based upon the number of the received signals.

In a step S2301, a value of the counter register 272 in the timer 270 is initialized. In a step S2302, the oscillator 271 oscillates once. In a step S2303, every time the oscillator 271 oscillates, a value of the counter register 272 is incremented by +1. In a step S2304, a value of the counter register 272 and a value of the counter maximum value register 273 are compared. When the value of the counter register 272 is not equal to the value of the counter maximum value register 273 as a result of comparison, processing is returned to the step S2302.

When the value of the counter register 272 is equal to the value of the counter maximum value register 273, processing proceeds to a step S2305. In the step S2305, a clock signal is transmitted to the clock 223. After the clock signal is transmitted, processing is returned to the step S2301.

The clock 223 receives the clock signal transmitted from the timer 223 in the step S2305 in a step S2306. In a step S2307, constant time is added to current time. Hereby, the current time of the sample execution device 200 is updated. After the step S2307 is executed, processing is returned to the step S2306 again and the reception of the next clock signal is awaited.

The constant time added to the current time in the step S2307 determines the precision of time in the clock 223. If the constant time is 1 second, the time precision of the clock 223 is in units of 1 second and if the constant time is 0.01 second, the time precision is in units of 0.01 second.

A value of the counter maximum value register 273 is set when the clock 223 is activated. The frequency of the oscillator 271 is 1 MHz (oscillates 1000000 times per one second) and the time precision of the clock 223 is 0.01 second. In this case, as the clock 223 is required to receive clock signals 100 times per one second, a value of the counter maximum value register 273 is set to 10000 (=1000000/100). Hereby, unless a value of the counter maximum value register 273 is varied by another program, the clock 223 receives a clock signal at a rate of 100 times per one second and current time is advanced by 0.01 second every time.

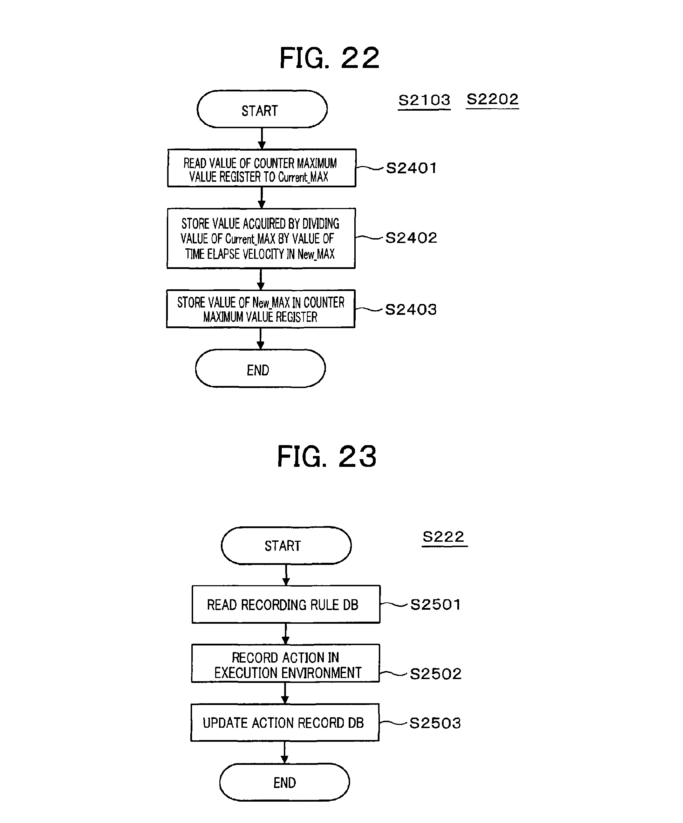

Fig. 22 is a flowchart showing a time elapse velocity adjustment process executed in the step S2103 of the sample execution process shown in Fig. 19. In the adjustment process, a frequency at which the timer 270 transmits a clock signal is adjusted by varying a value of the counter maximum value register 273.

In a step S2401, a value of the counter maximum value register 273 is read in variable Current_MAX. In a step S2402, a value acquired by dividing a value of the variable Current_MAX by a value of the time elapse velocity 30 is stored in variable New_MAX. In a step S2403, a value of the variable New_MAX is stored in the counter maximum value register 273.

For an example, a case that in a situation in which 10000 is set to a value of the counter maximum value register 273 as shown in Fig. 21, time elapse velocity 30 is made velocity of 72 times as shown in the record having the analysis management ID 1001 of 1 in Fig. 11 will be described.

In the step S2401, a value of the variable Current_MAX is set to 10000. In the step S2402, 139 (=10000/72) is stored in the variable New_MAX. In the step S2403, 139 is stored in the counter maximum value register 273.

As the frequency of the oscillator 271 is 1 MHz in the example shown in Fig. 21, a clock signal is transmitted from the timer 270 to the clock 223 approximately 7200 times per one second. As the clock 223 advances current time by 0.01 second every time the clock receives the clock signal, the time of the sample execution device 200 advances by 72 seconds by the reception of the clock signals of 7200 times. Hereby, velocity of 72 times specified in the time elapse velocity 30 is realized.

Fig. 23 shows a flow of an action recording process executed by the action recorder 222.

In a step S2501, the action recorder 222 reads the recording rule DB 251. In a step S2502, the action of the sample 10 in execution environment is recorded according to the read recording rule DB 251. In a step S2503, an action record 60 prepared while the sample 10 is executed is written to the action record DB 152 at timing at which the sample executor 221 stops the action recorder 222 in the step S2108 shown in Fig. 19.

Next, a concrete example of the action recording process shown in Fig. 23 will be described using the examples of the records shown in Figs. 12 and 15.

In the step S2501, the two records (the recording rule ID 1401: 1, 2) in the recording rule DB 251 are read out into the action recorder 222. In the step S2502, according to the read records in the recording rule DB 251, the packet transmission action of the sample A and the update of the desktop screen are recorded. A concrete recording method is the same as the method described in relation to Fig. 15.

In the step S2503, when the sample executor 221 executes processing according to the analysis scenario 20 having the analysis management ID 1102 of 1, the records having the action record IDs 1101 of 1, 2, 3, 4 are written to the action record DB 152. Besides, when the sample executor 221 executes processing according to the analysis scenarios 20 having the analysis management IDs 1102 of 2, 3, the records having the action record IDs 1101 of 5 and 6 are written to the action record DB 152.

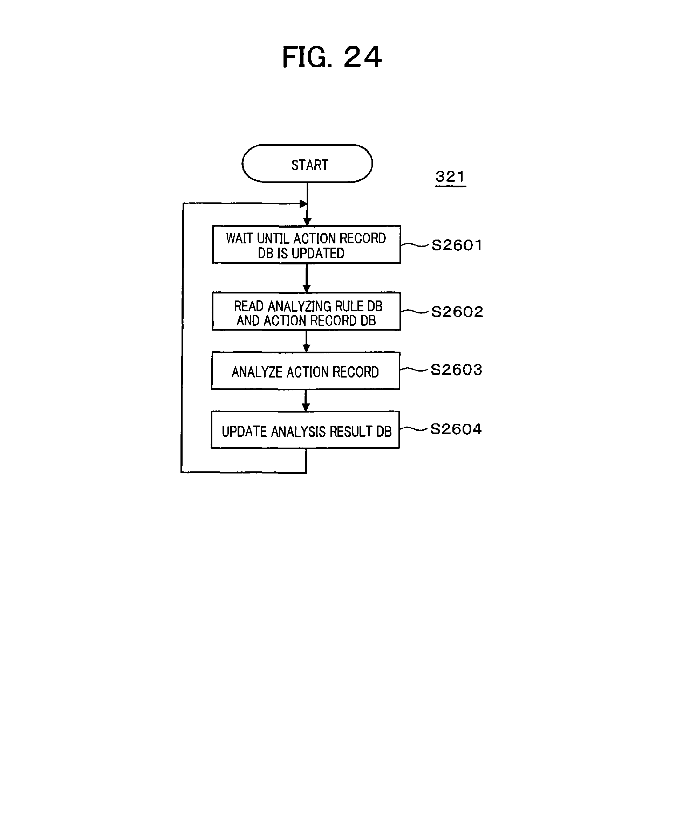

Fig. 24 shows a flow showing an action analysis process executed by the action analyzer 321.

In a step S2601, the action analyzer 321 waits until the action record DB 152 is updated and a new record is added. In a step S2602, the action analyzer 321 reads the analyzing rule DB 351 and the action record DB 152.

In a step S2603, the action analyzer analyzes records in the action record DB 152 according to the analyzing rule DB 351 and prepares a result of analysis 70. In the middle of analyzation, the manager updates the contents of the analyzing rule DB 351 via the input-output device 370 and may also manually make analysis based upon a criterion not described in the analyzing rule DB 351. In a step S2604, the result of analysis 70 prepared in the step S2603 is stored in the analysis result DB 153.

Next, a concrete example of the action analysis process shown in Fig. 24 will be described using the examples of the records shown in Figs. 12, 13, 16.

In the step S2601, as the records having the action record IDs 1101 of 1 to 4 are added in the action record DB 152, a standby is released. In the step S2602, the records having the action record IDs 1101 of 1 and 2 and three records in the analyzing rule DB 351 are read.

In the step S2603, as for the records having the action record IDs 1101 of 2 and 4, the record having the analyzing rule ID 1501 of 2 is applied and it is judged that the sample A has an attribute of false anti-virus software. Besides, as for the records having the action record IDs 1101 of 1 and 3, the record having the analyzing rule ID 1501 of 1 is applied and it is judged that the sample A has an attribute of bot. In the step S2604, the analysis result DB 153 is updated and the record having the analysis result IDs 1201 of 1 to 4 are newly added. Afterward, processing is returned to the step S2601.

Again, in the step S2601, as the records having the action record IDs 1101 of 5 and 6 are added to the action record DB 152, a standby is released. In the step S2602, the records having the action record IDs 1101 of 1 and 2 and two records in the analyzing rule DB 351 are read.

In the step S2603, as for the records having the action record IDs of 5 and 6, the record having the analyzing rule ID 1501 of 1 is applied and it is judged that the sample A has the attribute of bot. In the step S2604, the analysis result DB 153 is updated and the records having the analysis result IDs 1201 of 5 and 6 are newly added.

Fig. 25 shows a flow showing a communication monitoring process executed by the communication monitor 421.

In a step S2701, the communication monitor receives a mirror packet 90 of the sample 10 from the packet mirror device 700 via the interface 441.

In a step S2702, it is determined which of a transmitted TCP packet from the sample 10 or a response TCP packet addressed to the sample 10 the received mirror packet 90 is. In the case of the transmitted TCP packet, processing proceeds to a step S2703 and in the case of the response TCP packet, processing proceeds to a step S2710.

In the step S2703, it is determined whether the transmission TCP packet is a session start packet or not. More specifically, the TCP packet an SYN flag of which is on and an ACK flag of which is off is regarded as a session start packet. In the case of the session start packet, processing proceeds to a step S2704 and in the case of a packet except it, processing proceeds to a step S2706.

In the step S2704, a time elapse velocity change instruction 80 for varying time elapse velocity to even velocity is transmitted to the sample execution device 200.

In a step S2705, packet transmission time is recorded in the time elapse velocity DB 451 as finally transmitted packet observed time 1602 of a record having the packet ID 1601 of 2.

In the step S2706, it is determined whether the transmitted TCP packet is a session termination packet or not. More specifically, the TCP packet an FIN flag of which is on is regarded as a session termination packet. In the case of the session termination packet, processing proceeds to a step S2707 and in a case except it, processing proceeds to a step S2709.

In the step S2707, it is determined whether another session in which the sample 10 is established currently exists or not. When no session exists, processing proceeds to a step S2708. When another session exists, the processing is finished.

In the step S2708, a time elapse velocity change instruction 80 for making time elapse velocity RESET is transmitted to the sample execution device 200.

In the step S2709, packet transmission time is recorded in the time elapse velocity DB 451 as finally transmitted packet observed time 1602 of the latest record.

In the step S2710, optimum time elapse velocity 1607 is calculated based upon observed time of the response TCP packet. An example of concrete operation is the same as the example shown in Fig. 17.

In a step S2711, it is determined whether a session in which a value of optimum time elapse velocity of the latest record is smaller than a value calculated in the step S2710 exists or not. When the session exists, the processing is finished. When no session exists, processing proceeds to a step S2712.

In the step S2712, a time elapse velocity change instruction 80 for making time elapse velocity optimum time elapse velocity is transmitted to the sample execution device 200.

### (Transformed example)

Next, a transformed example of the system shown in Fig. 1 will be described.

### (1) Connection of sample execution device 200 and communication monitoring device 400

In the example shown in Fig. 1, the sample execution device 200 and the communication monitoring device 400 are connected via the network 500; however, another connecting means may be also used. For example, a method of connecting both devices using a serial cable and a USB cable is conceivable. In this case, a time elapse velocity change instruction 80 is transmitted to a sample execution device 200 via the cable.

### (2) Monitoring communication except TCP communication

In the example shown in Fig. 1, the communication monitoring device 400 monitors TCP communication of the sample 10. In addition, such communication that time-out readily occurs because of the rise of time elapse velocity like TCP communication is monitored and the time elapse velocity can be controlled.

For example, in a hyper text transfer protocol (HTTP), time-out occurs when a response message is not received within fixed time since a request message is transmitted from the side of a client terminal. Therefore, time-out in HTTP can be prevented by temporarily reducing time elapse velocity until a response message is received when a communication monitoring device 400 detects the transmission of a request message.

## Claims

1. A program analysis system that operates a program the operation of which is to be verified in execution environment where time elapse velocity can be arbitrarily adjusted, comprising:
a system management device provided with an analysis manager that manages an analysis situation of the program and determines time elapse velocity;
at least one sample execution device provided with a sample executor that executes the program in the execution environment based upon the time elapse velocity specified by the analysis manager and an action recorder that acquires the behavior of the program in the execution environment as an action record;
at least one action analyzer provided with an action analyzer that analyzes the action record and outputs a characteristic of the program as a result of analysis; and
at least one communication monitoring device provided with a communication monitor that adjusts the time elapse velocity so as to prevent time-out from occurring when the program communicates with an external device.

2. The program analysis system according to Claim 1, wherein the communication monitoring device sets the time elapse velocity of the sample execution device to a predetermined value when the communication of the program is started.

3. The program analysis system according to Claim 1, wherein the communication monitoring device resets the time elapse velocity of the sample execution device to a predetermined value when the communication of the program is finished.

4. The program analysis system according to Claim 1, wherein the communication monitoring device sets time elapse velocity by transmitting a time elapse velocity change instruction to the sample execution device.

5. The program analysis system according to Claim 1, wherein the communication monitoring device analyzes the contents of communication and estimates the time-out time of the communication.

6. The program analysis system according to Claim 5, wherein the communication monitoring device analyzes the contents of communication and acquires a request statement from the sample execution device and a response statement to the request statement.

7. The program analysis system according to Claim 6, wherein the communication monitoring device calculates a difference in time between the response statement and the request statement and estimates the time-out time based upon the difference in time.

8. The program analysis system according to Claim 7, wherein the communication monitoring device estimates the time-out time based upon the difference in time.

9. The program analysis system according to Claim 8, wherein the communication monitoring device calculates optimum time elapse velocity based upon the time-out time.

10. The program analysis system according to Claim 8, wherein the communication monitoring device transmits the time elapse velocity change instruction to the sample execution device every time the optimum time elapse velocity is updated.

11. The program analysis system according to Claim 10, wherein the communication monitoring device transmits the smaller value of the optimum time elapse velocity acquired from each communication as the time elapse velocity change instruction when the program executes a plurality of communications.

12. A program analysis method for operating a program the operation of which is to be verified in execution environment where time elapse velocity can be arbitrarily adjusted using a processor, comprising:
an analysis management step for managing an analysis situation of the program and determining time elapse velocity;
a sample execution step for executing the program in the execution environment based upon the time elapse velocity specified in the analysis management step;
an action recording step for acquiring the behavior of the program in the execution environment as an action record;
an action analysis step for analyzing the action record and outputting a characteristic of the program as a result of analysis; and
a communication monitoring step for adjusting the time elapse velocity so as to prevent time-out from occurring when the program communicates with an external device.

13. A program analysis system that operates a program the operation of which is to be verified in execution environment where time elapse velocity can be arbitrarily adjusted, comprising:
a system management device provided with an analysis manager that manages an analysis situation of the program and determines time elapse velocity; and
a processor provided with a sample executor that executes the program in the execution environment based upon the time elapse velocity specified by the analysis manager, an action recorder that acquires the behavior of the program in the execution environment as an action record, an action analyzer that analyzes the action record and outputs a characteristic of the program as a result of analysis, and a communication monitor that adjusts the time elapse velocity so as to prevent time-out from occurring when the program communicates with an external device.
